# EUROPÄISCHE PATENTSCHRIFT

(11) **EP 1 720 100 B1**
(45) Veröffentlichungstag und Bekanntmachung des Hinweises auf die Patenterteilung: **18.07.2007**
(21) Anmeldenummer: 05009621.3
(22) Anmeldetag: 02.05.2005
(51) Int. Cl.: G06F 11/26

(54) **Verfahren und Vorrichtung zur Emulation einer programmierbaren Einheit**
Method and apparatus for emulating a programmable unit
Méthode et dispositif d'émulation d'une unité programmable

(43) Veröffentlichungstag der Anmeldung: 08.11.2006
(73) Patentinhaber: Accemic GmbH & Co. KG, 83126 Flintsbach (DE)
(72) Erfinder: Lange, Alexander, 82064 Strasslach (DE); Weiss, Alexander, 83126 Flintsbach (DE)
(74) Vertreter: Eisenführ, Speiser & Partner

(56) Entgegenhaltungen:
- EP-A- 0 942 375
- EP-A- 1 139 220
- US-A- 5 408 637
- US-A- 5 515 530
- GONZALES D R: "USING THE MOTOROLA DSP ON-CHIP EMULATION CIRCUIT" WESCON TECHNICAL PAPERS, WESTERN PERIODICALS CO. NORTH HOLLYWOOD, US, Bd. 36, 17. November 1992 (1992-11-17), Seiten 680-686, XP000350135

## Beschreibung

Die Erfindung betrifft ein Verfahren und eine Vorrichtung zur Emulation einer programmierbaren Einheit, im Folgenden als programmierbare Einheit, PE, bezeichnet. Eine solche programmierbare Einheit ist beispielsweise ein Prozessor, Mikrocontroller, Signalprozessor oder dergleichen. Eine programmierbare Einheit enthält mindestens ein Rechenwerk, im Folgenden als CPU oder Target-CPU bezeichnet.

Weiterhin kann die programmierbare Einheit, PE, in der Regel einen der CPU direkt zugeordneten Speicher umfassen, welcher als Registerspeicher bezeichnet wird. Dieser Registerspeicher kann in eine Anzahl von Blöcken unterteilt sein, die im Folgenden als Registerbänke bezeichnet werden. Verschiedenen Programmteilen wie z.B. Hauptprogramm, Unterprogrammen oder Ausnahmeroutinen kann nun jeweils eine Registerbank exklusiv zugeteilt werden. Alle einer Registerbank exklusiv zugeordneten Programmteile werden im Folgenden als Kontext bezeichnet.

Zusätzlich umfasst die programmierbare Einheit in der Regel noch verschiedene Leitungen wie Datenleitungen, Adressleitungen oder Steuerleitungen, die in der Regel als Bus ausgeführt sind und Adressen, Daten, Steuersignale und dergleichen sowohl innerhalb der programmierbaren Einheit als auch gegebenenfalls zu Interfaceeinrichtungen übertragen.

Außerdem können in der PE neben einer oder mehreren CPUs eine oder mehrere Einheiten enthalten sein, die schreibend auf den Speicher zugreifen können, wie zum Beispiel ein DMA-Controller (Direct Memory Access). Im Folgenden werden diese Einheiten verallgemeinert als DMA-Einheit bezeichnet.

Neben der einen oder den mehreren CPUs kann die PE eine oder mehrere Einheiten enthalten, die die Speicherverwaltung kontrollieren, wie zum Beispiel eine MMU (Memory Management Unit). Im Folgenden werden diese Einheiten verallgemeinert als MMU-Einheit bezeichnet.

Die programmierbare Einheit enthält in der Regel noch eine oder mehrere DMA-Einrichtungen (direct memory access, im Folgenden ebenfalls als DMA-Einheit bezeichnet), welche es weiteren Peripherieeinheiten gestatten, ohne den Umweg über die CPU Daten im Adressraum der CPU zu transportieren.

Die programmierbare Einheit kann auch noch eine oder mehrere Peripherie-Einheiten wie Timer, Analog/Digital-Wandler und UARTs enthalten. Diese Peripherie-Einheiten werden im Folgenden als On-Chip-Peripherie bezeichnet.

In dieser programmierbaren Einheit laufen entsprechend Programme ab, um Daten zu verarbeiten oder um Befehle an externe Einrichtungen zu übermitteln. Um interne Zustände und Abläufe in der programmierbaren Einheit beobachten und gegebenenfalls auch zu verändern, sind Emulatoren entwickelt worden, mit deren Hilfe sich während des normalen Betriebs der programmierbaren Einheit diese internen Zustände und Abläufe beobachten und gegebenenfalls verändern lassen.

Entsprechende Informationen zum Laufzeit-Verhalten eines solchen Programms bei einer Applikation unter Echtzeitbedingungen sind ein sehr wichtiger Bestandteil zur Qualitätssicherung und Fehleranalyse. Die innerhalb der programmierbaren Einheit bearbeiteten oder verwendeten Adressen, Daten, Steuersignale, Zustände, Ereignisse und dergleichen werden im Folgenden als Trace-Daten bezeichnet.

In einem solchen Satz von Trace-Daten sind auch alle von der programmierbaren Einheit ausgeführten Prozessorbefehle sowie teilweise auch Lese- und Schreiboperationen aufgezeichnet und gegebenenfalls mit einer zeitlichen Kennzeichnung, einem sogenannten Timestamp, versehen. Die Trace-Daten dienen zur Analyse der Codeausführung (Code Coverage) sowie des zeitlichen Verhaltens von Funktionen und Prozeduren (Performance Analysis).

Um diese entsprechenden Trace-Daten zu gewinnen, werden sogenannten Emulatoren oder Emulationseinrichtungen eingesetzt.

Um das Verhalten der programmierbaren Einheit später analysieren zu können, sind in der Regel folgende Informationen erforderlich:
- gelesene Daten (Load)
- geschriebene Daten (Store)
- ausgeführte Sprünge (Branch)
- Kontextwechsel aufgrund von Interrupts.

Im Wesentlichen sind zwei Techniken aus der Praxis zur Gewinnung solcher Trace-Daten bekannt.

Eine Technik wird als sogenannter In-Circuit-Emulator (ICE) mit Bond-Out-Chip bezeichnet. In diesem ICE ist der sogenannte Bond-Out-Chip integriert, welcher grundsätzlich wie die programmierbare Einheit arbeitet, aber zusätzlich Zugriffe auf die internen Busse und einige zusätzliche Register bietet. Aus diesen internen Bussen erhält der ICE die gewünschten Trace-Daten.

In einem Zielsystem, in dem letztendlich die programmierbare Einheit ihren Dienst tun soll, wird diese in der Regel aus ihrer Fassung entfernt und die entsprechende Emulationseinrichtung direkt oder über ein Flachbandkabel verbunden eingesetzt. Die Emulationseinrichtung ist in der Regel eine Platine mit einem Prozessor gleichen Typs wie der Target-CPU, meist in einer Bond-Out-Variante. Zusätzlich sind noch Pufferspeicher und eine Interface-Logik zur Emulatorseite vorhanden.

Bei dieser Technik können alle Aktivitäten des Prozessors in Echtzeit aufgezeichnet werden.

Allerdings ist der erforderliche Platzbedarf relativ hoch und bei höheren Frequenzen die entsprechende Emulationseinrichtung nicht oder nur mit hohem Aufwand implementierbar. Weiterhin ist die Verkabelung in der Regel relativ aufwendig, so dass insgesamt hohe Kosten auftreten. Da die eigentliche programmierbare Einheit durch die Emulationseinrichtung ersetzt wird, ist diese im Zielsystem nicht verwendbar, sondern muss gegen die entsprechende programmierbare Einheit später wieder ausgetauscht werden.

Aus dem Dokument US-A-5,515,530 ist eine Vorrichtung und ein Verfahren bekannt, bei dem ein CPU-System mit einem In-Circuit-Emulator (ICE) mit einem externen System kommuniziert. Dieses dort als "Emulatorsystem" bezeichnete externe System dient dazu, den Betrieb des CPU-Systems für Abfrageoperationen zu unterbrechen. Es kann hierzu eine Interrupt-Anfrage an die CPU senden, um diese zu einem Umschalten von einem Emulationsmodus in einen Abfragemodus zu instruieren. Im Abfragemodus kann das externe Emulationssystem benutzerspezifische Operationen am ICE ausführen. Das Emulatorsystem der D1 führt demnach keine Emulation des CPU-Systems durch.

Aus der US-A-5,408,637 ist eine Emulationstechnik bekannt, bei ein Mikrocomputer einer externen Emulationseinrichtung über eine Kommunikationsverbindung Initialisierungsdaten übermittelt. Die externe Emulationseinrichtung vervollständigt während der Emulation unvollständig eingehende Daten mit Hilfe eines von ihr abgearbeiteten Simulationsprogramms, um eine laufende Emulation weiterführen zu können.

Eine weitere Technik wird als On-Chip Trace-Port bezeichnet und bietet eine weitere Möglichkeit zur Erlangung von Trace-Daten. Dazu wird eine minimale Funktionalität zur Gewinnung der Trace-Daten direkt auf der programmierbaren Einheit implementiert. Diese wird um einen Speicher sowie weitere Bauelemente, wie eine Logik und dergleichen ergänzt, welche das Aufzeichnen von internen Bussignalen in Echtzeit gestatten (Trace-Makrozelle).

Die so gewonnenen Daten können beispielsweise über ein JTAG-Interface (JTAG = Joint Test Acces Group) oder ein OCDS-Modul (On-Chip-Debug-Support-Modul) sowie einen speziellen Trace-Port verfügbar gemacht werden.

Der Trace-Port ist in der programmierbaren Einheit implementiert und intern mit dem Datenbus und Steuerbus verbunden. Der Trace-Port benötigt im Vergleich zu einem Bond-Out-Chip deutlich weniger Pins. Allerdings werden die Echtzeittrace-Möglichkeiten in der Praxis durch die Bandbreite des Trace-Ports eingeschränkt und ein komplettes Aufzeichnen aller Aktivitäten der programmierbaren Einheit ist nur mit sehr hohem Aufwand möglich. Deshalb werden in der Regel nur eingeschränkte Trace-Daten verfügbar gemacht.

Der Erfindung liegt daher die Aufgabe zugrunde, Verfahren und Vorrichtung zur Emulation einer programmierbaren Einheit dahingehend zu verbessern, dass in kostengünstiger Weise insbesondere auch die Gewinnung von Trace-Daten bei verminderter Übertragungsbandbreite zwischen der programmierbaren Einheit und der Emulationseinrich-tung unter Beibehaltung entsprechender Vorteile bekannter Trace-Techniken möglich ist.

Diese Aufgabe wird verfahrensmäßig durch die Merkmale des Patentanspruchs 1 und vorrichtungsgemäß durch die Merkmale der Patentansprüche 35 und 51 gelöst.

Das Verfahren des Anspruchs 1 dient zur Emulation einer programmierbaren Einheit, die zumindest eine CPU hat, mit Hilfe einer externen Emulationseinrichtung, die mit der programmierbaren Einheit über eine Kommunikationsverbindung verbunden ist. Das Verfahren weist die folgenden Schritte auf:
- Übermitteln vorbestimmter Initialisierungsdaten über die Kommunikationsverbindung an die Emulationseinrichtung, mit welchen Initialisierungsdaten sich die programmierbare Einheit initialisiert hat und/oder initialisiert wurde, zur Initialisierung der Emulation;
- Emulieren der programmierbaren Einheit (1) in der externen Emulationseinrichtung unter Verwendung übermittelter Emulationsdaten;
- Ermitteln jeweiliger Trace-Daten aus der Emulation in der externen Emulationseinrichtung; und
- Speichern und/oder Ausgeben der Trace-Daten,

Bei dem Verfahren des Anspruchs 1 erfolgt zusätzlich ein Übermitteln eines CPU-Taktsignals und, in definierter Beziehung zum CPU-Taktsignal, folgender Emulationsdaten an die Emulationseinrichtung:
- Daten, die von der CPU aus einem Datenbus der programmierbaren Einheit ausgelesen wurden;
- diejenigen externen Ereignisse, die einen Einfluss auf einen Programmzähler haben,
- optional, periodisch erzeugte vollständige oder teilweise Kopien eines Registerspeichers, sowie
- optional, ein Datentypsignal.

Der Grundgedanke gemäß Erfindung ist, dass die gewünschten Trace-Daten nicht von der CPU direkt, sondern von einer Emulation dieser durch eine externe und separate Emulationseinrichtung (EE) ermittelt und verfügbar gemacht werden.

Der Ablauf des Programms in der CPU wird durch zum Zeitpunkt des Programmstarts bekannte Daten wie dem Programmcode sowie durch während des Ablaufs des Programms bekannt werdende Daten und Ereignisse bestimmt. Die während des Ablaufs des Programms bekannt werdenden Daten und Ereignisse werden im Folgenden als CPU-Eingangsdaten oder RDI-Daten bezeichnet. CPU-Eingangsdaten sind insbesondere vom Datenbus gelesene Daten sowie externe Ereignisse, die Einfluss auf den Programmzähler haben, wie beispielsweise Nummer und Priorität eines aufgetretenen Interrupts oder dergleichen.

Die Emulation bildet das Verhalten der CPU nach.

Dazu wird die Emulation mit einem bekannten Zustand beispielsweise der CPU initialisiert, wobei dies auch ein Reset sein kann. Das heißt, die EE erhält von der CPU Daten, mit denen die Emulation in einen Zustand versetzt werden kann, der dem Zustand der CPU ganz oder teilweise entspricht. Diese Daten werden im Folgenden als Initialisierungsdaten bezeichnet.

Ausgehend von dem initialen Zustand und einem vorab bekannt gemachten Programmcode werden zur Laufzeit des Programms insbesondere die CPU-Eingangsdaten ganz oder teilweise an die EE übermittelt. Die Emulation ist dadurch in der Lage, den Pro-grammablauf der CPU nachzubilden. Dabei kann die EE insbesondere einen teilweisen oder vollständigen Satz von Trace Daten zugänglich machen.

Die Bandbreite zur Übermittlung der CPU -Eingangsdaten an die EE ist dabei geringer als die Bandbreite, welche zur Ausgabe eines kompletten Satzes von Trace-Daten von der CPU her erforderlich ist.

Dadurch ergibt sich eine erhebliche Verringerung des Aufwandes zur Implementierung der Datenausgabe aus der PE, was zu deren Verbilligung führt.

Die Schnittstelle der programmierbaren Einheit zur Kommunikation mit der EE wird im Folgenden als Trace-Port bezeichnet. Die über den Trace-Port übermittelten Daten, welche die durch die CPU gelesenen Daten sowie gegebenenfalls Nummer und Level eines aufgetretenen Interrupts werden im Folgenden als RDI-Daten (Read Data /Interrupt) oder auch CPU-Eingangsdaten bezeichnet.

Bei einem vorteilhaften Ausführungsbeispiel kann der Trace-Port bzw. die entsprechende Kommunikationsverbindung bidirektional ausgebildet sein, so dass nicht nur entsprechend RDI-Daten und gegebenenfalls weitere Daten von der programmierbaren Einheit an die Emulationseinrichtung, sondern auch eine Kontrolle insbesondere der programmierbaren Einheit durch die Emulationseinrichtung möglich ist. In einem solchen Fall kann ein Debugger über die Emulationseinrichtung auf den Adressraum der CPU zugreifen und entsprechende Lese- und Schreiboperationen vornehmen. Solche Operationen umfassen beispielsweise das Lesen und Schreiben von RAM und I/O-Bereichen, das Setzen von Haltepunkten (Breakpoints) oder dergleichen.

Das Setzen eines Haltepunktes bezeichnet dabei eine Methode, bei der die CPU angewiesen wird das Programm anzuhalten, sobald eine vorbestimmte Bedingung wie zum Beispiel das Erreichen einer bestimmten Programmstelle erfüllt ist.

Um den Trace-Port durch die programmierbare Einheit auch gegebenenfalls in anderem Zusammenhang verwenden zu können, kann die programmierbare Einheit diesen Trace-Port in einem Betriebsmodus auch zur Verwendung als allgemeinen I/O-Port schalten. Dies kann durch Setzen von speziellen Mode-Pins oder durch Setzen eines Bits in einem Kontrollregister innerhalb der programmierbaren Einheit erfolgen.

Vorrichtungsgemäß erfolgt die Auswahl der an den Trace-Port übertragenen RDI-Daten über ein Selektionsschaltnetz, welches beispielsweise als Multiplexer ausgeführt sein kann. An dieses Selektionsschaltnetz kann weiterhin ein Zwischenspeicher, welcher beispielsweise als FIFO (First In - First Out) ausgeführt sein kann, angeschlossen werden. Es besteht ebenfalls die Möglichkeit, von der CPU gelesene Daten zumindest teilweise wie auch in der PE auftretende Interrupts bei der PE wenigstens zur Übertragung an die EE direkt nach außen zu führen.

Entsprechend können die RDI-Daten insbesondere periodisch von der programmierbaren Einheit an die EE insbesondere in definierter Beziehung zu einem Taktsignal übermittelt werden.
Außer den aufgeführten RDI-Daten kann noch ein Daten-Typsignal sowie das bereits erwähnte Taktsignal über den Trace-Port übermittelt werden.

Die Steuerung des Selektionsschaltnetzes, die Bereitstellung von zumindest dem Taktsignal und/oder dem Daten-Typsignal sowie die Steuerung der Übertragung der RDI-Daten werden von einer PE-Trace-Steuereinrichtung vorgenommen.

Um gegebenenfalls die notwendige Anzahl der Anschlüsse des Trace-Ports bei der Datenübertragung zu verringern, können alle genannten Signale auch zeitlich / räumlich miteinander kombiniert und eventuell mit anderen Verfahren weitergehend komprimiert werden. Gemäß einer Möglichkeit kann die Übertragung der entsprechenden Datenbits der RDI-Daten bei der aufsteigenden und abfallenden Flanke des Taktsignals erfolgen (Double Data Rate), statt nur bei der aufsteigenden wie beim konventionellen Single Data Rate Verfahren. Eine andere Möglichkeit kann in einer Erhöhung der Takt-Frequenz bei der Übertragung der RDI-Daten oder auch in einer Verteilung der zu übertragenden Daten auf mehrere CPU Zyklen und das Einfügen von CRU Wartezyklen gesehen werden. Dies kann jeweils auch von der Emulationseinrichtung veranlasst werden.

Gegebenenfalls können die RDI-Daten über nur einen gemeinsamen Signalpfad an die EE übermittelt werden. Zwischen der programmierbaren Einheit und der EE kann die entsprechende Kommunikation über eine serielle Punkt-zu-Punkt-Verbindung, beispielsweise eine serialisierende / deserialisierende, differenzielle Punkt-Zu-Punkt-. Verbindung (LVDS Serdes) erfolgen.

Die entsprechende EE ist als externe Einheit ausgebildet, die mit der PE über den Trace-Port als Kommunikationsverbindung zur Übermittlung zumindest der RDI-Daten verbunden ist. Die EE weist zumindest eine eigene Emulations-Trace-Steuereinrichtung auf.

Die EE und die zugehörigen Modifikationen der PE sind in verschiedenen Ausführungsbeispielen dargestellt.

Bei einem ersten Ausführungsbeispiel besteht die Möglichkeit, die Emulation der CPU offline anhand zuvor von der PE erhaltener und abgespeicherter RDI-Daten durchzuführen.

Die Simulation des Verhaltens der CPU kann hier besonders vorteilhaft mit einem Software-Programm erfolgen, welches beispielsweise auf einer Verarbeitungs- und Darstellungseinrichtung, wie einen PC, als Teil der EE läuft. Durch diese Emulation werden entsprechende Trace-Daten ermittelt und beispielsweise abgespeichert und/oder an eine externe weitere Einheit ausgegeben.

Um gegebenenfalls für über den Trace-Port in die EE eingelesene RDI-Daten eine bestimmte zeitliche Zuordnung zur Verfügung zu stellen, kann das Taktsignal in der EE in einer entsprechenden Zähleinrichtung gezählt werden. Eine solche Zuordnung eines Zeitpunkts nennt man dabei einen Timestamp.

Es besteht die Möglichkeit, dass die von der programmierbaren Einheit übermittelten Daten in einem Speicher der EE, wie einem RAM, einer Festplatte oder dergleichen abgelegt werden. Diese Daten können die RDI-Daten mit oder ohne Timestamp sein. Um die Emulation auch zu einem späteren Zeitpunkt als zu einem Programmstart beginnen zu können, muss die PE der EE den Zustand der CPU zu diesem späteren Zeitpunkt bekannt machen.

Dazu kann die PE einen aktuellen Inhalt des Registerspeichers oder einzelner Registerbänke abspeichern, was im Folgenden als Registerspeicherkopie bezeichnet wird. Diese Registerspeicherkopie kann nun zusätzlich zu den RDI-Daten an die EE übertragen werden. Ist die Registerspeicherkopie komplett ausgegeben, wird eine neue Kopie des Registerspeichers oder einzelner Registerbänke, vorzugsweise der momentan aktuellen Registerbank eingelesen und dann wieder ausgegeben usw..

Mit der Registerspeicherkopie kann die Emulation initialisiert und für einen Kontext, für den eine Registerspeicherkopie vorliegt, die Emulation ab dem Zeitpunkt der Erstellung der Registerspeicherkopie gestartet werden.

Die ab dem Zeitpunkt der Erfassung der verwendeten Registerspeicherkopie übertragenen RDI-Daten werden verwendet, um die auf diesen Zeitpunkt folgenden Instruktionen der CPU in der Emulationseinrichtung komplett nachzubilden.

Mit den nach dem Zeitpunkt des Programmstarts erfasste Registerspeicherkopien ergibt sich erfindungsgemäß die Möglichkeit, dass eine Simulation nicht den kompletten Ablauf des Programms der CPU erfassen muss, sondern für jede Kontextebene zum Zeitpunkt des zuletzt erfassten kompletten Abbildes der dem jeweiligen Kontext zugeordneten Registerbank die Simulation beginnen kann.

Bei einem besonders vorteilhaften Ausführungsbeispiel kann die entsprechende Emulation in Echtzeit erfolgen. Dazu kann die Emulationseinrichtung einen Logikbaustein, insbesondere ein programmierbarer Logikbaustein oder auch einen Bond-Out-Chip aufweisen. Diese bilden die erforderliche Funktionalität der CPU nach und können die entsprechenden Trace-Daten beispielsweise an die Verarbeitungs- und Darstellungseinrichtung ausgeben.

Vorteilhaft in diesem Zusammenhang ist, dass die Emulationseinrichtung keine On-Chip-Peripherie enthalten muss, die üblicherweise auf Bond-Out-Chips implementiert sind. Insbesondere ist die im Stand der Technik aufgrund unterschiedlicher Ausstattung mit On-Chip-Peripherie erforderliche Vielzahl von Bond-Out-Chips für eine Mikrocontrollerfamilie nicht mehr nötig.

Da nicht für jede Mikrocontrollerfamilie mit unterschiedlicher Ausstattung an Peripherie ein Bond-Out-Chip gefertigt werden muss, kann erfindungsgemäß ein einziger Bond-Out-Chip oder eine entsprechende Implementierung in dem programmierbaren Logikbaustein zur Unterstützung aller Mitglieder einer solchen Mikrocontrollertamilie ausreichend sein.

Insbesondere bei einem programmierbaren Logikbaustein ergibt sich als Vorteil, dass eine einzige Emulationseinrichtung zur Emulation einer Vielzahl unterschiedlicher Ausführungsvarianten von programmierbaren Einheiten verwendet werden kann, indem die jeweilige Implementierung der Echtzeit -Emulation der programmierbaren Einheit in den programmierbaren Logikbaustein geladen wird.

Um gegebenenfalls nur bestimmte Trace-Daten abzuspeichern oder auszugeben, können diese nach bestimmten Kriterien oder auch vollständig gefiltert und dann zur weiteren Verarbeitung abgespeichert oder ausgegeben werden.

Bei einer zusätzlichen Haltepunkt (Breakpoint)-Funktionalität der Emulationseinrichtung kann es sich als Vorteil erweisen, wenn neben eventuell auf der programmierbaren Einheit implementierten Mechanismen zur Unterstützung von Haltepunkten weitere Mechanissen zur Unterstützung von insbesondere komplexeren Haltepunkten-in-der-Emulatiönseinrichtung realisiert sind. Die entsprechenden Informationen stehen der Emulationseinrichtung zur Verfügung und es wird zusätzlich die Möglichkeit geschaffen, die programmierbare Einheit anzuhalten und auf den Adress- und Datenbus der programmierbaren Einheit zugreifen zu können.

Die komplexen Haltepunkte können von der Emulation verwaltet werden und wenn ein gültiger Haltepunkt durch die Emulationseinrichtung erkannt wird, wird die CPU angehalten. Über eine geeignete Schnittstelle, die durch den Trace-Port realisiert sein kann, kann ein Zugriff auf Adress- und Datenbus der programmierbaren Einheit erfolgen. Erfindungsgemäß besteht dabei die Möglichkeit, die CPU exakt bei der Instruktion anzuhalten, bei welcher die komplexe Haltepunkt-Bedingung erfüllt ist.

Weiterhin können ein oder mehrere Pins des Trace-Ports auch als Ausgangs-Pins verwendet werden, indem ein zugehöriges Kontroll-Register durch die Emulation bedient wird und die Emulationseinrichtung den Ausgangspin bereitstellt. Die Ausgangssignale dieser Pins können gegebenenfalls durch ein Flachbandkabel oder dergleichen wieder in die Nähe der PE übertragen werden. Für den Fall, dass die Emulation nicht aktiv ist, kann der Trace-Port direkt an das Netz der Ausgangssignale über Jumper oder dergleichen angeschlossen werden.

Bei einem weiteren Ausführungsbeispiel der Erfindung besteht zusätzlich die Möglichkeit, neben der Echtzeit-Emulation der CPU auch eine Echtzeit-Emulation insbesondere des internen und externen Schreib- und Lese-Speicher (im Folgenden als RAM bezeichnet) der PE durchzuführen.

In diesem Fall enthalten die RDI-Daten neben den Interrupt-Nummem und Interrupt-Leveln nur noch gelesene Daten von Speicherbereichen, welche nicht ausschließlich durch die CPU änderbar sind, wie beispielsweise I/O-Bereiche, Dual Ported RAM oder dergleichen.

Vorrichtungsgemäß kann dazu die PE zusätzlich einen Adresskomparator aufweisen, weicher mit der PE-Trace-Steuereinrichtung und dem Adressbus verbunden ist. Dieser Adresskomparator teilt der PE-Trace-Steuereinrichtung mit, ob gelesene Daten aus einem Adressbereich stammen, auf den auch durch andere Funktionseinheiten als in der Echtzeit-Emulation enthaltene Funktionseinheiten schreibend zugegriffen wird. Es besteht dabei die Möglichkeit, dass die im Adresskomparator auszuwertenden Adressbereiche fest programmiert sind, z.B. für in der PE befindliche fest verdrahtete I/O-Bereiche, oder frei konfigurierbar sind, beispielsweise für externen Speicher wie zum Beispiel ein Dual-Ported RAM.

Weiterhin stehen der Emulationseinrichtung noch Informationen über ein Abbild des Programmspeichers und ein Abbild des RAMs der programmierbaren Einheit zur Verfügung, soweit letzterer nicht während der Initialisierungsphase vollständig initialisiert wird. In diesem Zusammenhang ist es weiterhin von Vorteil, wenn die entsprechende Emulation neben der CPU weitere Funktionseinheiten der programmierbaren Einheit umfasst, welche in der Lage sind, auf den entsprechenden Speicher schreibend zuzugreifen. Solche Funktionseinheiten sind beispielsweise weitere CPUs und / oder eine oder mehrere DMA-Einheiten und / oder eine oder mehrere MMU-Einheiten oder dergleichen.

Es besteht die Möglichkeit, dass eine entsprechende Emulations-Trace-Steuereinrichtung oder die EE die PE beziehungsweise Teile der PE wie eine oder mehrere CPUs und / oder eine oder mehrere DMA-Einheiten zur Vermeidung eines Verlusts beim Transport der RDI-Daten zur EE anhält, bis die Übertragung beendet ist. Dies ist allerdings nur bei einer Übertragung der anfallenden Daten bei nicht ausreichender Bandbreite des Trace-Ports gegebenenfalls erforderlich.

Insbesondere für Echtzeit-Emulationen kann es sich weiterhin als Vorteil erweisen, wenn die EE ein Debug-Interface aufweist.

Es besteht weiterhin die Möglichkeit, die durch den Trace-Port belegten Pins der PE durch das in der PE ablaufende Anwendungsprogramm zu benutzen.

An der Adresse der Steuer-Register, welche ein oder mehrere Pins kontrollieren, die während des Debug-Prozesses durch den Trace-Port belegt sind, können in der EE entsprechende Steuer-Register implementiert werden, die ein oder mehrere digitale Ausgänge des EE kontrollieren. Greift die Echtzeit-Emulation schreibend auf diese Steuer-Register zu, so verhalten sich die Pins der EE wie die entsprechenden Pins der PE. Es besteht ebenso die Möglichkeit, die Pins als Eingänge oder kombinierte Ein- und Ausgänge zu betreiben, für diesen Fall kann eine Datenübertragung zur Übermittlung der Eingangssignale der Pins an die CPU implementiert werden. Es besteht ebenso die Möglichkeit, die Pins als Ein- und Ausgänge von durch die Steuerregister kontrollierten und in der EE nachgebildeten Peripherieeinheiten wie beispielsweise Pulsweitenmodulatoren, Displaytreiber und dergleichen zu betreiben.

Um entsprechende programmierbare Einheiten ohne Trace-Port in einem Endprodukt verwenden und trotzdem während der Entwicklungsphase Debuggen und Emulieren zu können, kann zur Emulation und zum Debugging eine programmierbare Einheit mit Trace-Port in dem Endprodukt bzw. Zielsystem an Stelle einer programmierbaren Einheit ohne Trace-Port mittels insbesondere eines Adapters einsetzbar sein.

Vorteilhafte Ausführungsbeispiele der Erfindung werden im Folgenden anhand der in der Zeichnung beigefügten Figuren näher erläutert.

Es zeigen:
- Figur 1: eine Prinzipdarstellung von erfindungsgemäßem Verfahren und Vorrichtung zur Emulation einer programmierbaren Einheit für eine Offline-Emulation;
- Figur 2: ein Ausführungsbeispiel zu einer Offline-Emulation ohne RAM-Emulation;
- Figur 3: eine Darstellung analog zu Figur 2 für eine Echtzeit Emulation ohne RAM Emulation.
- Figur 4: eine Darstellung analog zu Figur 3 für eine Echtzeit-Emulation mit RAM-Emulation.
- Figur 5: eine Darstellung analog zu Figur 4 für eine Echtzeit-Emulation mit RAM-Emulation und Debug-Unterstützung
- Figur 6: eine Darstellung analog zu Figur 5 für eine Echtzeit-Emulation mit der Möglichkeit, die für den Trace-Port benutzten 10-Pins durch das Anwendungsprogramm nutzen zu können.

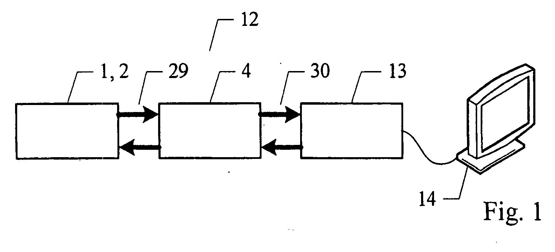

In Figur 1 ist die erfindungsgemäße Vorrichtung 12 im Prinzip dargestellt und insbesondere, wie Daten 29 zwischen einer PE 1 und einer EE 4 gemäß Erfindung ausgetauscht und welche Daten 30 zwischen einer EE 4 und einem Auswertungs-Softwareprogramm 13 gemäß Erfindung übermittelt werden.

Die zwischen PE 1 und EE 4 übermittelten Daten 29 umfassen komplette oder eingeschränkte Sätze folgender Daten: von der CPU gelesene Daten; Nummer und Level von aufgetretenen Interrupts; Kopien des Inhalts des Registerspeichers oder einzelner Registerbänke; zeitliche Informationen; Informationen über den aktuell übertragenen Datentyp, Ereignisse, Zustände und dergleichen, siehe auch die Initialisierungs- und CPU-Eingangsdaten.

Die Übermittlung der entsprechenden Daten 29 kann bei laufender als auch bei angehaltener CPU 2 der PE 1 erfolgen.

Die übermittelten Daten werden als Eingangsdaten einer Emulation in einer EE 4 verwendet, welche einen teilweisen oder kompletten Satz von Trace-Daten erzeugt, welche über eine Kommunikationsstrecke 30 einem Auswertungs-Softwareprogramm 13 oder dergleichen zur Verfügung gestellt werden.

Das Auswertungs-Softwareprogramm 13 kann die Trace-Daten visualisieren und beispielsweise auf einem Monitor 14 darstellen.

Ein Debugger-Softwareprogramm kann insbesondere auch die EE steuern, so dass die Kommunikationsstrecke 30 bidirektional aufgebaut sein kann.

Die EE kann insbesondere auch die PE steuern, so dass auch die Kommunikationsstrecke 29 bidirektional aufgebaut sein kann.

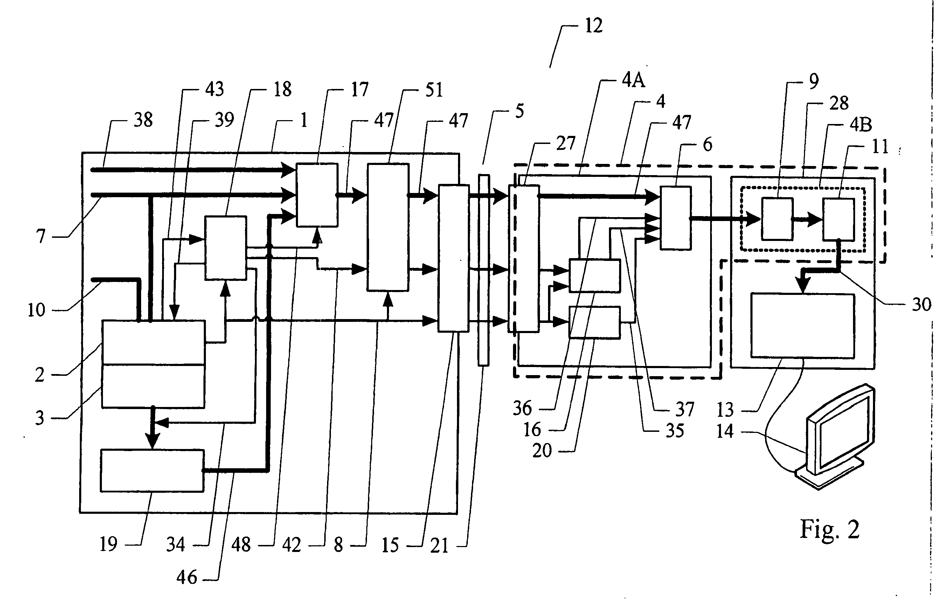

In Figur 2 ist ein erstes Ausführungsbeispiel der erfindungsgemäßen Vorrichtung 12 zur Emulation der programmierbaren Einheit 1 dargestellt, bei der die Emulation Offline ohne RAM-Emulation erfolgt. Die Emulation erfolgt nicht zeitgleich zum Ablauf des Programms in der CPU 2 der PE1, sondern zeitversetzt innerhalb einer Verarbeitungs- und Darstellungseinrichtung 28.

Erfindungsgemäß ist die PE 1 um eine PE-Trace-Steuerung 18, eine Registerspeicherkopie 19, ein Selektionsschaltnetz 17 mit insbesondere einem angeschlossenen Pufferspeicher 51 und einen Trace-Port 15 erweitert.

Die programmierbare Einheit 1 nach Figur 2 weist neben einer CPU 2 einen Registerspeicher 3 auf. Die Registerspeicherkopie 19 ist eine komplette oder teilweise Abbildung dieses Registerspeichers 3. Um diese Abbildung zu erhalten, wird eine Strobe-Information 34 von der PE-Trace-Steuerung 18 ausgegeben. Der Zeitpunkt des Kopierens von Inhalt des Registerspeichers in die Registerspeicherkopie muss der EE bekannt gemacht werden, beispielsweise über eine bestimmte Kodierung des Datentypsignals 42.

Verschiedene Informationen 43, wie auftretende Interrupts und / oder Datenzugriffe werden von der CPU 2 an eine PE-Trace-Steuerung 18 übermittelt. Diese ist andererseits über ein Haltesignal 39 mit der CPU verbunden. Die CPU 2 ist weiterhin mit einem Adressbus 10 verbunden.

Das Selektionsschaltnetz 17 ist mit einer Leitung oder einem Bus 46 zur Übermittlung der Registerspeicherkopie 19 sowie weiteren Bussen zur Übermittlung von Nummer und/oder Level eines Interrupts 38, einem Datenbus 7 oder dergleichen verbunden. Das Selektionsschaltnetz 17 wird mittels einer Datenselektionsleitung 48 von der PE-Trace-Steuerung 18 gesteuert, wobei die Datenselektionsleitung 48 dem Selektionsschaltnetz 17 sowohl die Datenquelle als auch die Busbreite der Datenquelle mitteilt.

Vorzugsweise steuert die PE-Trace-Steuerung 18 das Selektionsschaltnetz 17 derart, dass Interrupts 38 mit höherer Priorität als von der CPU 2 vom Datenbus 7 gelesenen Daten übertragen werden. Sollten keine Interrupts 38 und /oder gelesene Daten zur Übertragung bereitstehen, kann mit niedrigster Priorität die Registerspeicherkopie 19 übertragen werden.

Es sei darauf hingewiesen, dass die Kennzeichnung oder Unterscheidung der entsprechenden Leitungen oder Signalpfade im folgenden in der Regel durch die übertragenden Daten erfolgt, so dass beispielsweise statt Datenbus 7 nur auf Daten 7 Bezug genommen wird.

Das Selektionsschaltnetz 17 ist über eine Datenleitung 47 mit dem Trace-Port 15 verbunden. Zwischen das Selektionsschaltnetz 17 und dem Trace-Port 15 ist der Pufferspeicher 51, welcher beispielsweise als FIFO organisiert ist, geschaltet.

Von der CPU wird ein Taktsignal 8 an die PE-Trace-Steuerung 18, an den Pufferspeicher 51 und über den Trace-Port 15 an die EE 4 übermittelt. In bestimmter Beziehung zu diesem Taktsignal kann die PE über den Trace-Port 15 die am Ausgang des Selektionsschaltnetz 17 bzw. des Pufferspeicher 51 anliegenden Daten an die Emulationseinrichtung 4 über eine Kommunikationsverbindung 5 übermitteln, wobei die EE 4 über wenigstens einen entsprechenden Emulatoreingang 27 verfügt.

Weiterhin wird ein Datentypsignal 42 von der PE-Trace-Steuerung 18 an den Trace-Port 15 ausgegeben werden, wobei dieses Datentypsignal 42 ebenfalls über den Pufferspeicher 51 zwischengespeichert werden kann.

Es besteht ebenfalls die Möglichkeit, den Trace-Port 15 bei keiner Verbindung zur EE 4 in einen normalen I/O-Port zu schalten, indem beispielsweise spezielle Mode-Pins gesetzt oder ein Bit in einem Kontrollregister der CPU gesetzt wird.

Über den Trace-Port 15 erfolgt über die Kommunikationsverbindung 5, wie beispielsweise eine serialisierende / deserialisierende differenzielle Punkt-Zu-Punkt-Verbindung 21 zumindest die Übermittlung der entsprechenden Daten an den Emulatoreingang 27.

Die EE 4 ist für den Fall einer Offline-Emulation in zwei Einheiten geteilt: eine Datenerfassungseinheit 4A und eine Emulationseinheit 4B, wobei die Emulationseinheit 4B in einem PC als externe Verarbeitungs- und Darstellungseinrichtung 28 implementiert ist.

Die vom Emulatoreingang 27 erfassten Signale wie insbesondere das Taktsignal 8 und das Datentypsignal 42 können beispielsweise einer EE-Trace-Steuerung 16 zugeführt werden. Weiterhin weist die EE 4 einen Zähler 20 auf, durch den die Taktsignale 8 mitgezählt werden, so dass für alle über den Emulatoreingang 27 eingelesenen Daten bei Bedarf eine Zeitzuordnung, die sogenannte Timestamp 35, zur Verfügung steht. Die entsprechend über den Emulatoreingang 27 eingelesenen Daten werden, gegebenenfalls mit Timestamp versehen, in einem Speicher 6, welcher beispielsweise als RAM oder Festplatte oder dergleichen implementiert sein kann, abgelegt.

Von der EE-Trace-Steuerung 16 erfolgt eine Übermittlung an den Speicher 6 von Datentyp 36 und Schreibinformationen 37. Der entsprechende Timestamp 35 wird vom Zähler 20 an den Speicher 6 übermittelt.

Die im Speicher 6 erfassten Daten werden der Emulationseinheit 4B übermittelt, welche das Verhalten der CPU der PE nachbildet und einen vollständigen oder teilweisen Satz von Trace-Daten erzeugt. Dazu werden die sich im Speicher 6 befindlichen Daten einer Offline-Emulationseinheit 9 zugeführt, welche als Software-Programm in dem PC 28 implementiert ist. Die von der Offline-Emulationseinheit 9 gewonnen Trace-Daten werden beispielsweise in einem Trace-Daten-Speicher 11 abgelegt und können an ein Auswertungs-Softwareprogramm 13 über Verbindung 30 übermittelt werden. Dieses Auswertungs-Softwareprogramm 13 kann beispielsweise die Ergebnisse des Debug-Prozesses auf einem Monitor 14 visualisieren.

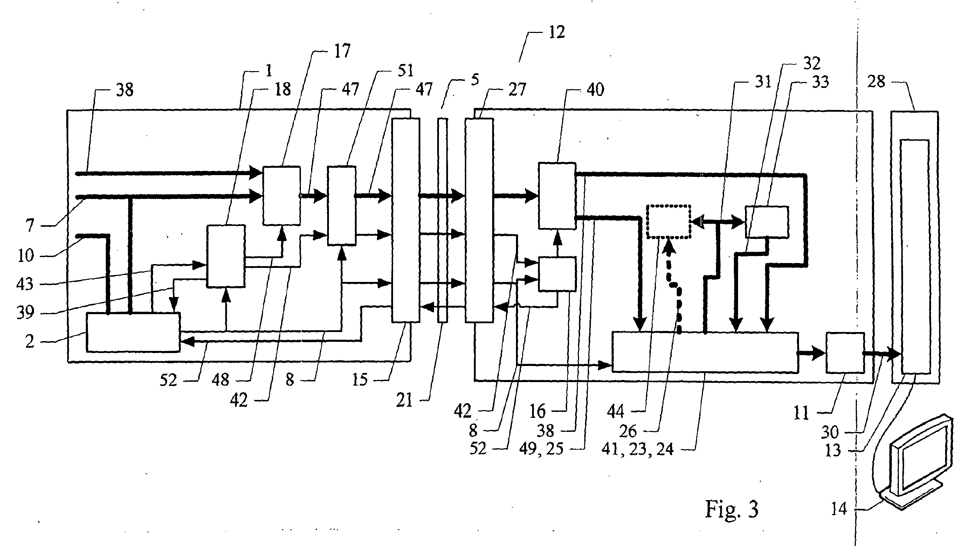

Ein zweites Ausführungsbeispiel der erfindungsgemäßen Vorrichtung 12 ist in Figur 3 dargestellt, wobei mit diesem Ausführungsbeispiel eine Echtzeit-Emulation durchgeführt wird. Dabei wird eine Registerspeicherkopie 19, siehe Figur 2, nicht mehr benötigt, so dass die PE einfacher und kostengünstiger aufgebaut werden kann.

In diesem Ausführungsbeispiel kann die CPU 2 insbesondere durch ein von der PE-Trace-Steuerung 18 erzeugtes und ausgegebenes Haltesignal 39 und/oder ein von der EE-Trace-Steuerung 16 erzeugtes und ausgegebenes Haltesignal 52 angehalten werden.

Neben dem Verzicht auf die Registerspeicherkopie 19 ist es insbesondere auch nicht mehr notwendig, die Strobe-Information 34 von der PE-Trace-Steuerung 18 auszugeben sowie eine Leitung oder einen Bus 46 zur Übermittlung der Registerspeicherkopie 19 zu implementieren, siehe Figur 2.

In der EE 4 wird das Verhalten der CPU 2 der PE 1 mit einer Echtzeit-Emulationseinheit 41, beispielsweise einem programmierbaren Logikbaustein 23 oder einem Bond-Out-Chip 24 nachgebildet. Dazu ist die Echtzeit-Emulationseinheit 41 mit einem Adressbus 31 und einem Programm-Datenbus 32 an einen Programmspeicher 33 angeschlossen. In dem Programmspeicher 33 befindet sich insbesondere teilweise oder komplett der gleiche Programmcode wie im der CPU 2 zugehörigen Programmspeicher.

Ein Taktsignal 8 wird von der CPU 2 über den Emulatoreingang 27 und über die entsprechende Kommunikationsverbindung 5 an die EE 4 übermittelt und dort der Echtzeit-Emulationseinheit 41 zugeführt.

Die EE-Trace-Steuerung 16 steuert anhand des empfangenen Datentypsignals 42 und/oder eines Taktsignal 8 einen Demultiplexer 40, welcher der Echtzeit-Emulationseinheit 41 insbesondere entweder die gelesenen Daten 49 der CPU 2 oder die an der CPU 2 auftretenden Interrupt-Nummem und -Level 38 verfügbar macht, siehe RDI-Daten.

Der Datenbus der Echtzeit-Emulationseinheit 41 greift schreibend, siehe Verbindung 26, auf einen RAM 44 zu. Da in diesem Ausführungsbeispiel das RAM 44 nicht gelesen wird, muss der RAM 44 nicht implementiert werden. Lediglich der auf den RAM 44 schreibende Datenzugriff 26 wird für die Generierung eines vollständigen Satzes von Trace-Daten benötigt.

Bei Lesezugriffen 25 auf den Datenbus erhält die Echtzeit-Emulationseinheit 41 die zu lesenden Daten 49 aus dem Demultiplexer 40.

In der Echtzeit-Emulationseinheit 41 wird die Funktionalität der CPU 2 nachgebildet und anschließend werden die entsprechenden Trace-Daten vollständig oder nach bestimmten Kriterien gefiltert in einem Trace-Daten-Speicher 11 zwischengespeichert oder direkt an das Auswertungs-Softwareprogramm 13 ausgegeben. Dieses Auswertungs-Softwareprogramm 13 läuft vorzugsweise in der Verarbeitungs- und Darstellungseinrichtung 28, welche beispielsweise ein PC sein kann, ab und visualisiert die Ergebnisse des Debug-Prozesses auf dem Monitor 14.

In der EE 4 kann teilweise auf die Nachbildung von On-Chip-Peripherie der PE verzichtet werden Die Verwendung beispielsweise des programmierbaren Logikbausteins gestattet es, eine einzige EE zur Emulation einer Vielzahl unterschiedlicher Target-CPU zumindest einer Mikrocontrollerfamilie zu verwenden. Die jeweilige Implementierung der Echtzeit CPU-Emulation kann in den programmierbaren Logikbaustein 23 geladen werden.

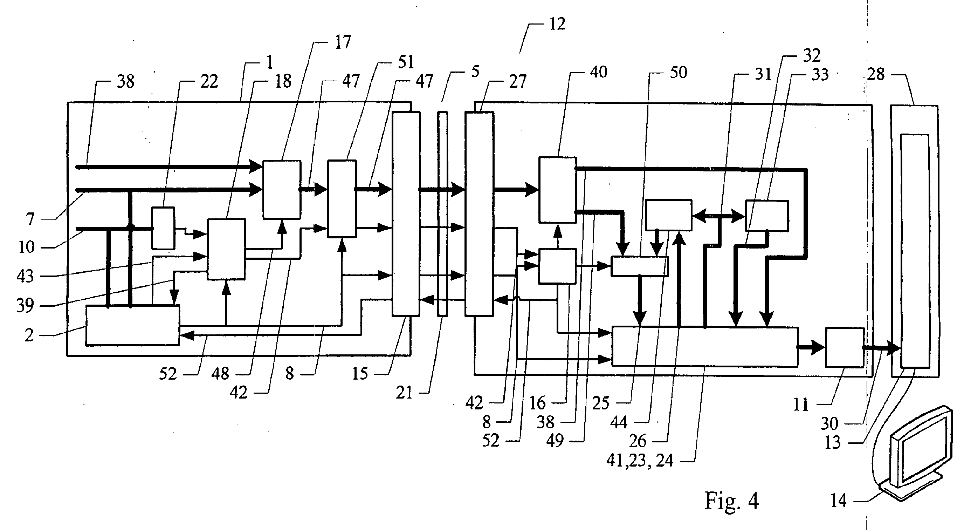

Ein drittes Ausführungsbeispiel der erfindungsgemäßen Vorrichtung 12 ist in Figur 4 dargestellt, wobei mit diesem Ausführungsbeispiel das in Figur 3 dargestellte Ausführungsbeispiel um die Möglichkeit erweitert wird, den RAM der PE 1 ebenfalls mit zu emulieren und dadurch die zur Emulation erforderliche zwischen PE 1 und EE 4 zu übertragene Datenmenge weiterhin zu reduzieren.

Die entsprechende EE 4 wird bei der entsprechenden Echtzeit-Emulation alle Funktionseinheiten umfassen, welche in der Lage sind, auf den Speicher schreibend zuzugreifen, insbesondere eine oder mehrere CPUs und/oder eine oder mehrere DMA-Einheiten und/oder eine oder mehrere MMU-Einheiten.

Bei einer Echtzeit-Emulation mit RAM-Emulation wird zusätzlich initial als statische Information ein Abbild des RAMs der PE 1 an die EE 4 übertragen, sofern der Inhalt des RAMs nicht durch eine zuverlässige explizite Initialisierung oder dergleichen eindeutig vorbestimmt ist. Mit diesem Abbild wird der RAM 44 der EE 4 initialisiert.

Bei einer Online-Emulation mit RAM-Emulation unterscheidet sich der entsprechende Aufbau der PE der erfindungsgemäßen Vorrichtung 12 von dem in Figur 3 beschriebenen Aufbau durch einen zusätzlichen Adresskomparator 22, welcher zwischen Adressbus 10 und PE-Trace-Steuerung 18 verschaltet ist. Der Adresskomparator 22 zeigt an, ob die momentan auf dem Datenbus 7 gelesenen Daten aus einem Adressbereich stammen, auf den auch nicht in der Echtzeit-Emulationseinheit 41 der EE enthaltene Funktionseinheiten schreibend zugreifen.

Gelesene Daten aus Adressbereichen, auf die ausschließlich durch in der Echtzeit-Emulationseinheit 41 enthaltene Funktionseinheiten schreibend zugegriffen wird, müssen in diesem Ausführungsbeispiel nicht mehr an die EE 4 übertragen werden. Die jeweiligen Adressbereiche können hier fest programmiert und/oder auch frei konfigurierbar sein.

Im Übrigen entspricht der Aufbau der programmierbaren Einheit 1 der im Zusammenhang mit Figur 3 geschilderten erfindungsgemäßen Vorrichtung 12.

Die EE 4 weist in diesem Ausführungsbeispiel zusätzlich einen Datenselektor 50 auf, welcher eine Quelle für von der Echtzeit-Emulationseinheit 41 gelesenen Daten 25 bestimmt. Zeigt das Datentypsignal 42 der EE-Trace-Steuerung 16 an oder erkennt die Emulation selbständig, dass auf Daten lesend zugegriffen werden soll, welche sich in einem Adressbereich befinden, auf den ausschließlich durch in der Echtzeit-Emulationseinheit 41 enthaltene Funktionseinheiten schreibend zugegriffen werden kann, so schaltet die EE-Trace-Steuerung 16 den Datenselektor 50 derart, dass die Echtzeit-Emulationseinheit 41 Daten aus dem RAM 44 der EE liest.

Zeigt das Datentypsignal 42 der EE-Trace-Steuerung 16 an oder erkennt die Emulation selbständig, dass auf Daten lesend zugegriffen werden soll, welche sich in einem Adressbereich befinden, auf den durch andere als in der Echtzeit-Emulationseinheit 41 enthaltene Funktionseinheiten schreibend zugegriffen wird, so schaltet die EE-Trace-Steuerung 16 den Datenselektor 50 derart, dass die Echtzeit-Emulation 41 die von der PE erhaltenen Daten 49 liest.

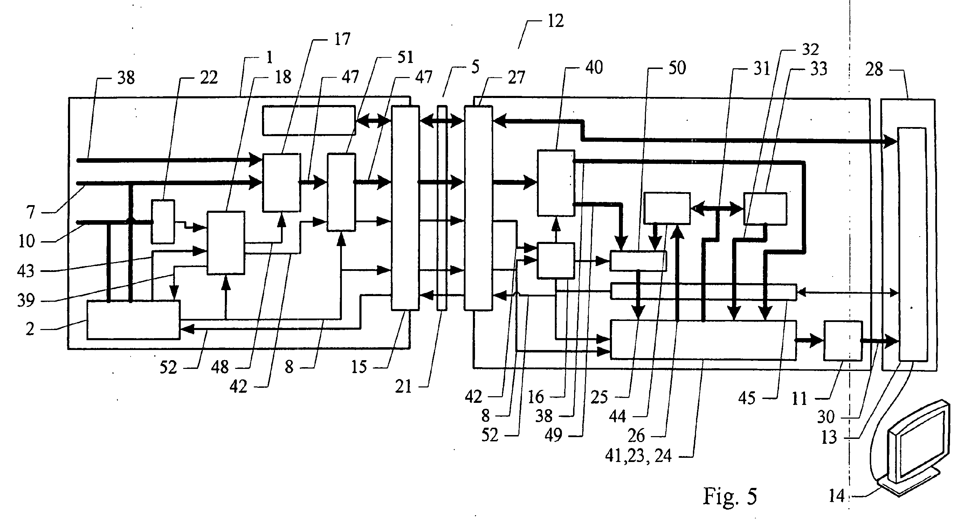

Ein viertes Ausführungsbeispiel der erfindungsgemäßen Vorrichtung 12 ist in Figur 5 dargestellt, wobei mit diesem Ausführungsbeispiel die in Figur 3 oder in Figur 4 dargestellten Ausführungsbeispiele um die Möglichkeit erweitert werden, komplexe Haltepunkte setzen zu können.

Erfindungsgemäß besteht die Möglichkeit, bestimmte Haltepunkte zur Unterbrechung des Programmablaufs zu unterstützen, um beispielsweise-bestimmte Werte am Haltepunkt des Programmablaufs zu überprüfen. Neben eventuell auf der Target-CPU implementierte Mechanismen zur Unterstützung solcher Haltepunkte können durch die Emulationseinrichtung 4 weitere Mechanismen zur Unterstützung von insbesondere komplexeren Haltepunkten realisiert werden. Die Emulationseinrichtung verfügt dabei über die Möglichkeit, die CPU anzuhalten und auf den Adress- und Datenbus 10, 7 der CPU 2 zuzugreifen.

Die Emulationseinrichtung 4 umfasst ein Debug-Interface 45, welches zum Erkennen von Haltepunkten verwendet und von dem Auswertungs-Softwareprogramm 13 gesteuert wird. Wird ein gültiger Haltepunkt erkannt, so wird die CPU der PE sowie die emulierte CPU 23,24 über ein Haltesignal 52 gestoppt.

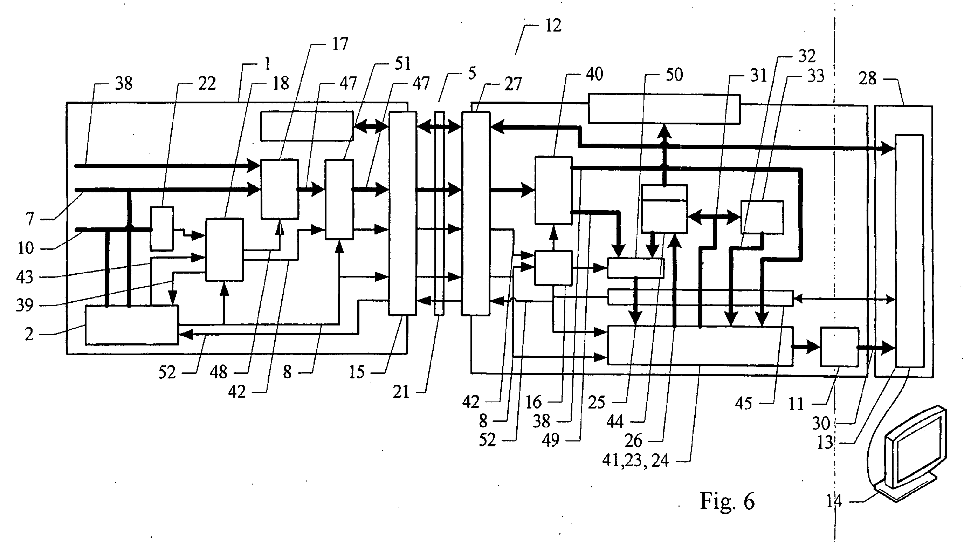

Ein fünftes Ausführungsbeispiel der erfindungsgemäßen Vorrichtung 12 ist in Figur 6 dargestellt, wobei mit diesem Ausführungsbeispiel die in Figur 3, Figur 4 oder in Figur 5 dargestellten Ausführungsbeispiele um die Möglichkeit erweitert werden, die durch den Trace-Port 15 belegten Pins der PE 1 durch das in der PE 1 ablaufende Anwendungsprogramm benutzen zu können.

An einer Adresse von Steuerregistern, welche ein oder mehrere Pins kontrollieren, die während des Debug-Prozesses durch den Trace-Port 15 belegt sind, werden in der EE 4 entsprechende Steuerregister 54 implementiert, die ein oder mehrere digitale Ausgänge 55 des EE 4 kontrollieren. Greift die Echtzeit-Emulationseinheit 41 schreibend auf diese Steuerregister 54 zu, so verhalten sich die Pins 55 der EE wie die entsprechenden Pins der PE.

Es besteht ebenso die Möglichkeit, die Pins 55 als Eingänge oder kombinierte Ein- und Ausgänge zu betreiben, für diesen Fall muss eine Datenübertragung zur Übermittlung der Eingangssignale der Pins 55 an die CPU 2 implementiert werden. Zur Vereinfachung ist diese Datenübertragung in Figur 6 nicht dargestellt.

Es besteht ebenso die Möglichkeit, die Pins 55 als Ein und Ausgänge von durch die Steuerregister 54 kontrollierten und in der EE nachgebildeten Peripherieeinheiten wie beispielsweise Pulsweitenmodulatoren, Displaytreiber und dergleichen zu betreiben. Es besteht die Möglichkeit, Signale der Pins 55 zur PE beispielsweise über ein Flachbandkabel oder dergleichen zurückzuführen und in der Nähe der PE auf einen die PE tragenden Platine einzuspeisen. Mittels Jumpern oder dergleichen kann eine Umschaltung zwischen dem Trace-Port 15 und den Pins 55 erfolgen.

Für den Fall, dass der Trace-Port 15 zur Kommunikation mit der EE verwendet wird, werden angeschlossenen Netze über die Ausgänge 55 gesteuert, wobei über Jumper oder dergleichen die angeschlossenen Netze von den zugehörigen Pins des Trace-Ports 15 abgetrennt sind. Für den Fall, dass der Debug-Prozess abgeschlossen ist und die Pins des Trace-Port 15 der PE zur Verfügung stehen, können die angeschlossenen Netze direkt an die zugehörigen Pins des Trace-Ports 15 angeschlossen sein. Dazu kann der Trace-Port 15 als normaler I/O-Port konfiguriert werden, indem beispielsweise spezielle Mode-Pins gesetzt oder ein Bit in einem Kontrollregister der CPU gesetzt wird.

Es sei noch darauf hingewiesen, dass zur Vereinfachung alle weitere On-Chip-Peripherie der PE 1 nicht in den Figuren 2 bis 6 dargestellt ist.

Durch die Übertragungsdauer von Daten von der PE 1 and die EE 4 kann es zu Zeitverzögerungen und einem entsprechenden Taktversatz kommen, welche bei der Emulation und der Auswertung der gewonnenen Tracedaten entsprechend zu berücksichtigen ist. Besonders beim Setzen von komplexen Haltepunkten, wie sie in dem Ausführungsbeispiel nach Figur 5 beschrieben wurden, muss eine eventueller Taktversatz entsprechend berücksichtigt werden.

Bei allen Ausführungsbeispielen der Erfindung ist eine Verringerung der Anzahl der Anschlüsse des Trace-Ports möglich, indem beispielsweise die Übertragung von entsprechenden Daten bei ab- und aufsteigenden Flanken des Takt-Signals übertragen wird, die Takt-Frequenz erhöht wird, oder die zu übertragenden Daten auf mehrere CPU Zyklen verteilt werden und entsprechende CPU Wartezyklen bei Anfallen einer zu großen Datenmenge eingefügt werden.

Während bei bekannten Emulationseinrichtungen, wie In-Circuit-Emulator mit Bound-Out-Chip oder On-Chip Trace-Port die Datenrate zur Emulation im Wesentlichen in der Größenordnung von 100 MByte/s liegt bei einer Breite von Datenbus und Adressbus von 32 Bit und bei einer bestimmten Anzahl von CPU-Instruktionen pro Sekunde, kann die erforderliche Bandbreite des Trace-Ports gemäß Erfindung bei sonst gleichen Daten auf ungefähr 50 MByte/s bei beispielsweise einer Echtzeit-Emulation ohne RAM-Emulation und auf ungefähr 5 MByte/s bei einer Echtzeit-Emulation mit RAM-Emulation reduziert werden.

## Patentansprüche

1. Verfahren zur Emulation einer programmierbaren Einheit (1), die zumindest eine CPU (2) hat, mit Hilfe einer externen Emulationseinrichtung (4), die mit der programmierbaren Einheit über eine Kommunikationsverbindung (5) verbunden ist, wobei das Verfahren die folgenden Schritte aufweist:
- Übermitteln vorbestimmter Initialisierungsdaten über die Kommunikationsverbindung (5) an die Emulationseinrichtung (4), mit welchen Initialisierungsdaten sich die programmierbare Einheit initialisiert hat und/oder initialisiert wurde, zur Initialisierung der Emulation;
- Emulieren der programmierbaren Einheit (1) in der externen Emulationseinrichtung unter Verwendung übermittelter Emulationsdaten;
- Ermitteln jeweiliger Trace-Daten aus der Emulation in der externen Emulationseinrichtung; und
- Speichern und/oder Ausgeben der Trace-Daten,
**gekennzeichnet durch**
- Übermitteln eines CPU-Taktsignals (8) und, in definierter Beziehung zum CPU-Taktsignal, folgender Emulationsdaten an die Emulationseinrichtung:
- Daten, die von der CPU aus einem Datenbus der programmierbaren Einheit ausgelesen wurden;
- diejenigen externen Ereignisse, die einen Einfluss auf den Programmzähler der CPU (2) der programmierbaren Einheit (1) haben,
- optional, periodisch erzeugte vollständige oder teilweise Kopien eines Registerspeichers (3), der CPU (2) der programmierbaren Einheit (1), sowie
- optional, ein Datentypsignal.

2. Verfahren nach Anspruch 1, bei dem entweder das CPU-Taktsignal (8) oder ein Signal, das es erlaubt, das CPU-Taktsignal abzuleiten, von der programmierbaren Einheit (1) über einen Trace-Port (15) an die Emulationseinrichtung übermittelt wird.

3. Verfahren nach Anspruch 1, bei dem der Schritt des Übermittelns der Emulationsdaten das ausschließliche Übermitteln folgender Daten umfasst:
- Daten, die von der CPU aus einem Datenbus der programmierbaren Einheit ausgelesen wurden;
- diejenigen externen Ereignisse, die einen Einfluss auf einen Programmzähler haben,
- optional, periodisch erzeugte vollständige oder teilweise Kopien eines Registerspeichers, sowie
- optional, ein oder mehrere Datentypsignale.

4. Verfahren nach einem der vorstehenden Ansprüche, bei dem die Emulation ab Erhalt einer von der programmierbaren Einheit (1) übermittelten Datenmenge erfolgt.

5. Verfahren nach einem der vorstehenden Ansprüche, bei dem das CPU-Taktsignal (8) an eine Trace-Steuerung (18) und/oder einen Pufferspeicher (51) der programmierbaren Einheit (1) übermittelt wird.

6. Verfahren nach einem der vorstehenden Ansprüche, bei dem die Emulationsdaten mit ab- und/oder aufsteigenden Flanken des CPU-Taktsignals (8) übertragen werden.

7. Verfahren nach einem der vorstehenden Ansprüche, bei dem eine Taktfrequenz, welche die Übermittlung der Emulationsdaten steuert, während der Übermittlung der Emulationsdaten gegenüber der CPU-Taktfrequenz erhöht wird.

8. Verfahren nach einem der vorstehenden Ansprüche, bei dem die übermittelnden Emulationsdaten auf mehrere Zyklen der Target-CPU (2) verteilt werden.

9. Verfahren nach einem der vorstehenden Ansprüche, bei dem CPU-Wartezyklen gesteuert durch die programmierbare Einheit oder durch die Emulationseinrichtung während des Übermittelns der Emulationsdaten eingefügt werden.

10. Verfahren nach einem der vorstehenden Ansprüche, bei dem die programmierbare Einheit (1) in einen Betriebsmodus zur Verwendung eines Trace-Ports (15) der programmierbaren Einheit, der als Teil der Kommunikationsverbindung (5) ausgebildet ist, als allgemeinen Eingabe/AusgabePort geschaltet wird, wobei das Schalten entweder den gesamten Trace-Port (15) oder einen Teil von Pins des Trace-Ports betrifft.

11. Verfahren nach einem der vorstehenden Ansprüche, bei dem ein teilweises oder vollständiges Abbild eines Programmspeichers und/oder teilweisen oder vollständigen Abbildes eines RAM der programmierbaren Einheit (1) an die Emulationseinrichtung (4) übermittelt wird, solange das RAM anfänglich nicht vollständig initialisiert worden ist.

12. Verfahren nach einem der vorstehenden Ansprüche, bei dem die empfangenen Trace-Daten in einer Speichereinrichtung (6) der Emulationseinrichtung (4) abgespeichert werden.

13. Verfahren nach einem der vorstehenden Ansprüche, mit einem Schritt des Filterns der ermittelten Trace-Daten, Ausgabe und/oder Speicherung mittels der Emulationseinrichtung (4).

14. Verfahren nach Anspruch 1, bei dem die Emulation der programmierbaren Einheit (1) die Emulationseinheit (4) von zuvor erhaltenen und abgespeicherten Emulationsdaten offline durchgeführt wird.

15. Verfahren einem der vorstehenden Ansprüche, bei dem die CPU-Taktsignale (8) in der Emulationseinrichtung (4) mittels einer Zähleinrichtung (20) zur Zuordnung eines bestimmten Zeitpunkts zu den übermittelten Emulationsdaten gezählt werden.

16. Verfahren nach Anspruch 14 oder 15, bei dem die Emulation der programmierbaren Einheit ohne Emulation eines RAM der programmierbaren Einheit durchgeführt wird.

17. Verfahren nach einem der vorstehenden Ansprüche, bei dem der Programmablauf der programmierbaren Einheit (1) von der Emulationseinrichtung (4) für jede Kontextebene ab dem Zeitpunkt eines zuletzt erfassten vollständigen Abbildes einer Registerbank (3) des selben Kontexts simuliert wird.

18. Verfahren nach einem der Ansprüche 13 bis 17, bei dem die CPU der programmierbaren Einheit mit Hilfe eines Computerprogramms emuliert wird, das auf einem Computer ausgeführt wird.

19. Verfahren nach Anspruch 14, bei dem die Emulation der programmierbaren Einheit das Emulieren entweder eines Teils des RAM der programmierbaren Einheit oder des vollständigen RAM der programmierbaren Einheit oder des vollständigen RAM der programmierbaren Einheit (1) beinhaltet.

20. Verfahren nach einem der vorstehenden Ansprüche, mit den Schritten:
- Ermitteln in der programmierbaren Einheit, ob augenblicklich von der CPU oder während einer DMA-Operation gelesene Daten aus einem Adressbereich der programmierbaren Einheit stammen, auf die von anderen Funktionseinheiten als der CPU der programmierbaren Einheit (1) zugegriffen werden kann, gefolgt von
- Übertragen nur derjenigen Daten, die von der CPU oder während einer DMA-Operation gelesen wurden, an die Emulationseinrichtung (4), die von dem Adressbereich der programmierbaren Einheit stammen, der von anderen Funktionseinheiten als der CPU der programmierbaren Einheit beschrieben werden kann.

21. Verfahren nach Anspruch 20, bei dem die Adressbereiche, die von anderen Funktionseinheiten als der CPU der programmierbaren Einheit beschrieben werden können, entweder fest programmiert und/oderfrei konfiguriert werden.

22. Verfahren nach einem der Ansprüche 1 bis 14, bei dem die Emulation; in der Emulationseinrichtung (4) in Echtzeit erfolgt.

23. Verfahren nach Anspruch 22, bei dem, zur Durchführung der Echtzeit-Emulation, eine entsprechende Implementierung der CPU (2) der programmierbaren Einheit (1) in einem programmierbaren Logikbaustein der Emulationseinrichtung (4) geladen wird.

24. Verfahren nach einem der vorstehenden Ansprüche, bei dem die programmierbare Einheit (1) oder die CPU (2) der programmierbaren Einheit von der Emulationseinrichtung (4) oder von der programmierbaren Einheit (1) bei Erkennen eines gültigen Haltepunktes angehalten wird.

25. Verfahren nach einem der vorstehenden Ansprüche, bei dem jeder Haltepunkt von der Emulationseinrichtung (4) initiiert und verwaltet wird.

26. Verfahren nach einem der vorstehenden Ansprüche, bei dem ein Haltesignal (39, 52) von einer Trace-Steuerung (18) der programmierbaren Einheit oder einer Trace-Steuerung (16) der Emulationseinrichtung an die CPU (2) der programmierbaren Einheit (1) übermittelt wird.

27. Verfahren nach einem der Ansprüche 22 bis 26, bei dem die Emulationseinrichtung (4) auf den Adressbus und den Datenbus (10, 7) der programmierbaren Einheit (1) nach Anhalten der programmierbaren Einheit zugreift.

28. Verfahren nach einem der Ansprüche 22 bis 27, bei dem die Emulationseinrichtung in einer Echtzeit-Emulation Schreib- und Lesezugriff auf ihren Speicher hat und, im Falle eines Lesezugriffs, die von der programmierbaren Einheit (1) übermittelten Daten empfängt.

29. Verfahren nach einem der vorstehenden Ansprüche, bei dem ein Datenselektor (50) der Emulationsrichtung (4) zum Auslesen von Daten aus einer Speichereinrichtung der Emulationseinrichtung (4) oder zum Lesen von Daten (49) der programmierbaren Einheit umgeschaltet wird.

30. Verfahren nach einem der Ansprüche 22 bis 29, bei dem die Echtzeit-Emulation der programmierbaren Einheit ohne Emulation des RAMs der programmierbaren Einheit durchgeführt wird.

31. Verfahren nach Anspruch 30, bei dem ausschließlich die folgenden Emulationsdaten übermittelt werden:
- Daten, die von der CPU aus einem Datenbus der programmierbaren Einheit ausgelesen wurden;
- diejenigen externen Ereignisse, die einen Einfluss auf einen Programmzähler haben.

32. Verfahren nach einem der Ansprüche 22 bis 30, bei dem die Echtzeit-Emulation der programmierbaren Einheit eine Emulation entweder eines Teils oder des vollständigen RAMs der programmierbaren Einheit in Echtzeit beinhaltet.

33. Verfahren nach einem der Ansprüche 22 bis 32, bei dem in einer Echtzeit-Emulation ein vollständiges oder teilweises Abbild wenigstens eines RAMs der programmierbaren Einheit (1) auch in der Emulationseinrichtung (4) mitgeführt wird.

34. Verfahren nach Anspruch 33, bei dem diejenigen Funktionseinheiten der programmierbaren Einheit emuliert werden, die auf die programmierbare Einheit (1) schreibend zugreifen.

35. Vorrichtung zur Emulation einer programmierbaren Einheit, mit
- einer programmierbaren Einheit (1), die zumindest eine CPU (2) enthält,
- einer Emulationseinrichtung (4), die als externe Einheit (14) über einen Trace-Port (15) als Kommunikationsverbindung (5) zur Übermittlung von Emulationsdaten mit der programmierbaren Einheit (1) verbunden ist und ausgebildet ist, entsprechende Trace-Daten aus einer Emulation der programmierbaren Einheit zu ermitteln,
wobei die Emulationseinrichtung (4) mindestens eine Trace-Steuereinrichtung (16) und eine Speichereinrichtung (11) für Trace-Daten und/oder eine Ausgabeeinrichtung in Verbindung mit einer externen Verarbeitungs- und Darstellungseinrichtung (28) aufweist,
wobei die programmierbare Einheit ausgebildet ist, vorbestimmte Initialisierungsdaten über die Kommunikationsverbindung (5) an die Emulationseinrichtung (4) zu übermitteln, mit welchen Initialisierungsdaten sich die programmierbare Einheit initialisiert hat und/oder initialisiert wurde, zur Initialisierung der Emulation;
**dadurch gekennzeichnet, dass** die programmierbare Einheit ausgebildet ist,
- ein CPU-Taktsignal (8) der programmierbaren Einheit und, in definierter Beziehung zum CPU-Taktsignal, die folgenden Emulationsdaten durch die Kommunikationsverbindung (5) an die Emulationseinrichtung (4) zu übermitteln:
- Daten, die von der CPU aus einem Datenbus der programmierbaren Einheit ausgelesen wurden;
- diejenigen externen Ereignisse, die einen Einfluss auf den Programmzähler der CPU der programmierbaren Einheit haben,
- optional, periodisch erzeugte vollständige oder teilweise Kopien eines Registerspeichers (3), der CPU der programmierbaren Einheit sowie
- optional, ein Datentypsignal.

36. Vorrichtung nach Anspruch 35, bei der die programmierbare Einheit ausgebildet ist, ausschließlich die folgenden Emulationsdaten an die Emulationseinrichtung (4) zu übertragen:
- Daten, die von der CPU aus einem Datenbus der programmierbaren Einheit ausgelesen wurden;
- diejenigen externen Ereignisse, die einen Einfluss auf einen Programmzähler haben,
- optional, periodisch erzeugte vollständige oder teilweise Kopien eines Registerspeichers, sowie
- optional, ein oder mehrere Datentypsignale

37. Vorrichtung nach Anspruch 35 oder 36, bei der die Trace-Steuerung (18) der programmierbaren Einheit ausgebildet ist, ein Datentypsignal (42) als Teil der Emulationsdaten den Trace-Port (15) zu übermitteln, und soweit vorhanden, an einen Pufferspeicher (51) der programmierbaren Einheit (1) zur Zwischenspeicherung.

38. Vorrichtung nach einem der Ansprüche 35 bis 37, die ausgebildet ist, eine bidirektionale Kommunikation zwischen der programmierbaren Einheit (1) und der Emulationseinrichtung (4) bereitzustellen.

39. Vorrichtung nach einem der Ansprüche 35 bis 38, bei der die Emulationseinrichtung (4) ein Debug-Interface (25) aufweist.

40. Vorrichtung nach einem der Ansprüche 35 bis 39, bei der die Emulationseinrichtung einen Programmspeicher (33) hat, der dem Programmspeicher der programmierbaren Einheit (1) entspricht.

41. Vorrichtung nach einem der Ansprüche 35 bis 40, bei dem die programmierbare Einheit (1) mit einem Trace-Port (15) in ein Zielsystem anstelle einer programmierbaren Einheit (1) ohne Trace-Port einsetzbar ist, zum Debuggen oder zur Emulation.

42. Vorrichtung nach einem der Ansprüche 35 bis 41, bei dem die Emulationseinrichtung (4) einen zu einem umschaltbaren Datenselektor (50) aufweist, der zum Auslesen von Daten aus einem RAM (44) der Emulationseinrichtung (4) oder zum Lesen der von der programmierbaren Einheit (1) der empfangenen Daten umschaltbar ist.

43. Vorrichtung nach einem der Ansprüche 35 bis 42, bei dem die programmierbare Einheit (1) ausgebildet ist, das CPU- Taktsignal (8) über den Trace-Port (15) an die Emulationseinrichtung (4) zu senden.

44. Vorrichtung nach einem der Ansprüche 35 bis 43, bei der die Emulationseinrichtung (4) als Echtzeit- Emulationseinheit (41), ein Logikmodul in Form eines Bond-Out-Chips oder eines programmierbaren Logikmoduls (23) hat.

45. Vorrichtung nach einem der Ansprüche 35 bis 44, bei dem die Emulationseinrichtung, als Echtzeit-Emulationseinheit (41), mit einem Adressbus (31) und/oder dem Programmspeicher (33) und/oder dem Programm-Datenbus (32) verbunden ist.

46. Vorrichtung nach einem der Ansprüche 35 bis 45, bei dem die Emulationseinrichtung (4) eine Demultiplexeinrichtung (40) aufweist.

47. Vorrichtung nach einem der Ansprüche 35 bis 46, bei dem die Emulationseinrichtung (4) implementierte Steuerregister (54) aufweist, welche ein oder mehrere digitale Ausgänge (55) der Emulationseinrichtung (4) und/oder in der Emulationseinrichtung (4) nachgebildete Peripherieeinheiten der programmierbaren Einheit (1) kontrollieren.

48. Vorrichtung nach einem der Ansprüche 35 bis 47, bei der digitale Ausgänge (55) der Emulationseinrichtung (4) als Ausgänge schaltbar sind und bei der Signale der digitalen Ausgänge (55) über eine entsprechende Verbindung an die programmierbare Einheit (1) zurückführbar sind.

49. Vorrichtung nach einem der Ansprüche 35 bis 48, bei der eine Adressbusleitung (20) in der programmierbaren Einheit (1) mit der Trace-Steuerung (18) der programmierbaren Einheit über einen Adresskomparator (22) verbunden ist.

50. Vorrichtung nach einem der Ansprüche 35 bis 49, bei der die Emulationseinrichtung als Echtzeit- Emulationseinheit (41) mit einem RAM (44) über einen Datenbus verbunden ist.

51. Programmierbare Einheit (1), mit mindestens einer CPU (2) und mit einem Trace-Port als Kommunikationsverbindung (5) zum Übermitteln von Emulationsdaten an eine externe Emulationseinrichtung (1), wobei die programmierbare Einheit ausgebildet ist,
- vorbestimmte Initialisierungsdaten über die Kommunikationsverbindung (5) an die Emulationseinrichtung (4) zu übermitteln, mit welchen Initialisierungsdaten sich die programmierbare Einheit initialisiert hat und/oder initialisiert wurde, zur Initialisierung der Emulation;
**dadurch gekennzeichnet, dass** die programmierbare Einheit ausgebildet ist,
- ein CPU-Taktsignal (8) der programmierbaren Einheit und, in definierter Beziehung zum CPU-Taktsignal, die folgenden Emulationsdaten durch die Kommunikationsverbindung (5) an die Emulationseinrichtung (4) zu übermitteln:
- Daten, die von der CPU aus einem Datenbus der programmierbaren Einheit ausgelesen wurden;
- diejenigen externen Ereignisse, die einen Einfluss auf den Programmzähler der CPU der programmierbaren Einheit haben,
- optional, periodisch erzeugte vollständige oder teilweise Kopien eines Registerspeichers (3), der CPU der programmierbaren Einheit, sowie
- optional, ein Datentypsignal.

52. Programmierbare Einheit nach Anspruch 51, die ausgebildet ist, ausschließlich die folgenden Emulationsdaten über den Trace-Port (15) auszugeben:
- Daten, die von der CPU aus einem Datenbus der programmierbaren Einheit ausgelesen wurden;
- diejenigen externen Ereignisse, die einen Einfluss auf einen Programmzähler haben,
- optional, periodisch erzeugte vollständige oder teilweise Kopien eines Registerspeichers, sowie
- optional, ein oder mehrere Datentypsignale.

53. Programmierbare Einheit nach Anspruch 51 oder 52, die ausgebildet ist, die Emulationsdaten mit ab- und/oder aufsteigenden Flanken des Taktsignals (8) zu übertragen.

54. Programmierbare Einheit (1) nach einem der Ansprüche 51 bis 53, die ausgebildet ist, ein Taktsignal mit einer Frequenz zu erzeugen, die gegenüber einer CPU-Taktfrequenz erhöht ist, zum Steuern der Übermittlung der Emulationsdaten.

55. Programmierbare Einheit (1) nach einem der Ansprüche 51 bis 54, die ausgebildet ist, die zu übertragenden Emulationsdaten über mehrere Taktzyklen der CPU (2) zu verteilen.

56. Programmierbare Einheit (1) nach einem der Ansprüche 51 bis 55, die ausgebildet ist, in einen Betriebsmodus zur Verwendung des Trace-Ports (15) als allgemeinen Eingabe/Ausgabeport zu schalten.

57. Programmierbare Einheit nach einem der Ansprüche 51 bis 56, die mit dem Trace-Port (15) in ein Zielsystem einsetzbar ausgebildet ist, an Stelle einer anderen programmierbaren Einheit, zur Emulation oder zum Debuggen.

58. Programmierbare Einheit nach einem der Ansprüche 51 bis 57, die ausgebildet ist, ein teilweises oder vollständiges Abbild eines Programmspeichers und/oder ein teilweises oder vollständiges Abbild eines RAM der programmierbaren Einheit (1) an die Emulationseinrichtung zu übermitteln, vorausgesetzt, dass das RAM anfänglich nicht vollständig initialisiert wurde.

59. Programmierbare Einheit nach einem der Ansprüche 51 bis 58, bei der eine Trace-Steuerung (18) der programmierbaren Einheit ausgebildet ist, ein Datentypsignal (42) als Teil der Emulationsdaten an den Trace-Port (15) zu übermitteln, und so weit vorhanden, an einen Pufferspeicher (51) der programmierbaren Einheit (1) zur Zwischenspeicherung.

60. Programmierbare Einheit nach einem der Ansprüche 51 bis 59, die ausgebildet ist, ihr CPU-Taktsignal über den Trace-Port (15) an die Emulationseinrichtung (84) zu übermitteln.

## Claims

1. Method for emulation of a programmable unit (1), which has at least one CPU (2), by means of an external emulation device (4), which is coupled to the programmable unit by means of a communication link (5), the method comprising the following steps:
- transferring predetermined initialisation data through the communication link (5) to the emulation device (4), with which initialisation data the programmable unit (1) has initialised itself and/or has been initialised, for initialising the emulation;
- emulating the programmable unit (1) in the external emulation device using transferred emulation data;
- ascertaining respective trace data from the emulation in the external emulation device; and
- storing and/or the outputting the trace data,
**characterised by**
- transferring to the emulation device a CPU clock signal (8) and, in a defined relationship with the CPU clock signal, the following emulation data:
- data read by the CPU from a data bus of the programmable unit,
- those external events that have an influence on the program counter of the CPU (2) of the programmable unit (1),
- optionally, periodically created complete or partial copies of the register memory (3) of the CPU (2) of the programmable unit (1), and
- optionally, a data type signal.

2. Method according to claim 1, wherein either the CPU clock signal (8) or a signal which allows the original CPU clock signal to be derived is transmitted from the programmable unit (1) through a trace port (15) to the emulation device.

3. Method according to claim 1, wherein the step of transferring the emulation data comprises exclusively transferring the following data:
- data read by the CPU from a data bus of the programmable unit,
- those external events that have an influence on a program counter,
- optionally, periodically created complete or partial copies of a register memory, and
- optionally, one or more data type signals.

4. Method according to any one of the preceding claims, wherein the emulation is performed as of receiving a quantity of data transferred from the programmable unit (1).

5. Method according to any one of the preceding claims, wherein the CPU clock signal (8) is transferred to a trace controller (18) and/or a buffer memory (51) of the programmable unit (1).

6. Method according to any one of the preceding claims, wherein the emulation data is transferred with falling and/or rising edges of the CPU clock signal (8).

7. Method according to any one of the preceding claims, wherein a clock frequency driving the transfer of the emulation data is increased over the CPU clock frequency during transfer of the emulation data.

8. Method according to any one of the preceding claims, wherein the emulation data to be transferred is distributed over a plurality of cycles of the target CPU (2).

9. Method according to any one of the preceding claims, wherein insertion of CPU wait cycles is controlled by the programmable unit or by the emulation device while the emulation data is being transferred.

10. Method according to any one of the preceding claims, wherein the programmable unit (1) is switched to an operating mode for using a trace port (15), which is configured as a part of the communication link (5), of the programmable unit, as a standard input/output port, the switching applying to either the whole trace port (15) or to a subset of pins of the trace port.

11. Method according to any one of the preceding claims, wherein a partial or complete copy of a program memory and/or a partial or complete copy of a RAM of the programmable unit (1) is transferred to the emulation device (4), provided the RAM has not been completely initialised at the beginning.

12. Method according to any one of the preceding claims, wherein the received trace data is stored in a storage device (6) of the emulation device (4).

13. Method according to any one of the preceding claims, comprising a step of filtering the determined trace data, output and/or saving by means of the emulation device (4).

14. Method according to claim 1, wherein the emulation of the programmable unit (1) is performed offline by the emulation device (4) using previously obtained and stored emulation data.

15. Method according to any one of the preceding claims, wherein the CPU clock signals (8) are counted in the emulation device (4) with a counting device (20) for assigning a certain point in time to the transferred emulation data.

16. Method according to either claim 14 or claim 15, wherein the emulation of the programmable unit is performed without emulating a random access memory of the programmable unit.

17. Method according to any one of the preceding claims, wherein the program execution of the programmable unit (1) is simulated by the emulation device (4) for each context level beginning at the time of the last detected complete copy of a register bank (3) of the same context.

18. Method according to any one of claims 13 to 17, wherein the CPU of the programmable unit is emulated by means of a computer program which is executed on a computer.

19. Method according to claim 14, wherein the emulation of the programmable unit includes emulating either a part of the RAM of the programmable unit or the complete RAM of the programmable unit or the complete RAM of the programmable unit (1).

20. Method according to any one of the preceding claims, comprising the steps:
- determining in the programmable unit whether data currently read by the CPU or during a DMA operation originates from an address range of the programmable unit that can be accessed by function units other than the CPU of the programmable unit (1), followed by
- transfer of only those data read by the CPU or during a DMA operation to the emulation device (4), which originate from the address range of the programmable unit that can be written to by function units other than the CPU of the programmable unit.

21. Method according to claim 20, wherein the address ranges that can be written to by function units other than the CPU of the programmable unit are either programmed in a fixed way and/or freely configured.

22. Method according to any one of claims 1 to 14, wherein the emulation is performed in real time in the emulation device (4).

23. Method according to claim 22, wherein, for performing the real-time emulation, a corresponding implementation of the CPU (2) of the programmable unit (1) is loaded in a programmable logic module of the emulation device (4).

24. Method according to any one of the preceding claims, wherein the programmable unit (1) or the CPU (2) of the programmable unit is stopped by the emulation device (4) or by the programmable unit (1) upon detecting a valid breakpoint.

25. Method according to any one of the preceding claims, wherein each breakpoint is initiated and managed by the emulation device (4).

26. Method according to any one of the preceding claims, wherein a breakpoint signal (39, 52) is transferred from a trace controller (18) of the programmable unit or a trace controller (16) of the emulation device (16) to the CPU (2) of the programmable unit (1).

27. Method according to any one of claims 22 to 26, wherein the emulation device (4) accesses the address bus and data bus (10, 7) of the programmable unit (1) after stopping the programmable unit.

28. Method according to any one of claims 22 to 27, wherein the emulation device, in a real-time emulation, has write and read access to its memory and, in case of a read access, receives the data transferred from the programmable unit (1).

29. Method according to any one of the preceding claims, wherein a data selector (50) of the emulation device (4) is switched to reading data from a memory device of the emulation device (4) or to reading data (49) of the programmable unit.

30. Method according to any one of claims 22 to 29, wherein the real-time emulation of the programmable unit is performed without emulating the RAM of the programmable unit.

31. Method according to claim 30, wherein exclusively the following emulation data is transferred:
- data read by the CPU from a data bus of the programmable unit, and
- those external events that have an influence on a program counter.

32. Method according to any one of claims 22 to 30, wherein the real-time emulation of the programmable unit includes emulating either a part of or the complete RAM of the programmable unit in real time.

33. Method according to any one of claims 22 to 32, wherein in a real-time emulation a complete or partial copy of at least one RAM of the programmable unit (1) is also run in the emulation device (4).

34. Method according to claim 33, wherein those function units of the programmable unit are emulated, which write to the programmable unit (1).

35. Apparatus for emulation of a programmable unit, with
- a programmable unit (1) which has at least one CPU (2),
- an emulation device (4) which, as an external unit (14), is connected via a trace port (15) as a communication link (5) to the programmable unit (1) for transferring emulation data, and is configured to ascertain respective trace data from an emulation of the programmable unit,
wherein the emulation device (4) has at least one trace controller (16) and a storage device (11) for trace data and/or an output device in connection with an external processing and display device (28),
the programmable unit being configured to transfer predetermined initialisation data through the communication link (5) to the emulation device (4), with which initialisation data the programmable unit has initialised itself and/or has been initialised, for initialising the emulation;
**characterised in that** the programmable unit is configured
- to transfer a CPU clock signal (8) of the programmable unit and, in a defined relationship with the CPU clock signal, the following emulation data through the communication link (5) to the emulation device (4):
- data read by the CPU from a data bus of the programmable unit,
- those external events that have an influence on the program counter of the CPU of the programmable unit,
- optionally, periodically created complete or partial copies of a register memory (3) of the CPU of the programmable unit, and
- optionally, a data type signal.

36. Apparatus according to claim 35, wherein the programmable unit is configured to transfer exclusively the following emulation data to the emulation device (4):
- data read by the CPU from a data bus of the programmable unit,
- those external events that have an influence on a program counter,
- optionally, periodically created complete or partial copies of a register memory, and
- optionally, one or more data type signals.

37. Apparatus according to either claim 35 or claim 36, wherein the trace controller (18) of the programmable unit is configured to transfer a data type signal (42) as a part of the emulation data to the trace port (15) and, if present, to a buffer memory (51) of the programmable unit (1) for temporary storage.

38. Apparatus according to any one of claims 35 to 37, which is configured to provide bidirectional communication between the programmable unit (1) and the emulation device (4).

39. Apparatus according to any one of claims 35 to 38, wherein the emulation device (4) has a debugging interface (25).

40. Apparatus according to any one of claims 35 to 39, wherein the emulation device has a program memory (33) corresponding to the program memory of the programmable unit (1).

41. Apparatus according to any one of claims 35 to 40, wherein the programmable unit (1) is insertable with a trace port (15) into a target system in place of a programmable unit (1) without a trace port, for debugging or emulation.

42. Apparatus according to any one of claims 35 to 41, wherein the emulation device (4) has a switchable data selector (50), which can be switched for reading out data from a RAM (44) of the emulation device (4) or for reading the data received from the programmable unit (1).

43. Apparatus according to any one of claims 35 to 42, wherein the programmable unit (1) is configured to transmit the CPU clock signal (8) through the trace port (15) to the emulation device (4).

44. Apparatus according to any one of claims 35 to 43, wherein the emulation device (4), as a real-time emulation unit (41), has a logic module in the form of a bond-out chip or of a programmable logic module (23).

45. Apparatus according to any one of claims 35 to 44, wherein the emulation device, as the real-time emulation unit (41), is connected to an address bus (31) and/or the program memory (33) and/or the program data bus (32).

46. Apparatus according to any one of claims 35 to 44, wherein the emulation device (4) has a demultiplexing device (40).

47. Apparatus according to any one of claims 35 to 46, wherein the emulation device (4) has implemented control registers (54) which control one or more digital outputs (55) of the emulation device (4) and/or peripheral units copied from the programmable unit (1) in the emulation device (4).

48. Apparatus according to one of claims 35 to 47, wherein digital outputs (55) of the emulation device (4) are switchable as outputs, and wherein signals of the digital outputs (55) can be fed back via a corresponding connection to the programmable unit (1).

49. Apparatus according to one of the preceding claims 35 to 48, wherein an address bus line (20) in the programmable unit (1) is connected to the trace controller (18) of the programmable unit via an address comparator (22).

50. Apparatus according to any one of claims 35 to 49, wherein the emulation device, as the real-time emulation unit (41), is connected to a RAM (44) via a data bus.

51. Programmable unit (1), with at least one CPU (2) and with a trace port as a communication link (5) for transferring emulation data to an external emulation device (1),
wherein the programmable unit is configured
- to transfer predetermined initialisation data through the communication link (5) to the emulation device (4), with which initialisation data the programmable unit has initialised itself and/or has been initialised, for initialising the emulation;
**characterised in that** the programmable unit is configured
- to transfer a CPU clock signal (8) of the programmable unit and, in a defined relationship with the CPU clock signal, the following emulation data through the communication link (5) to the emulation device (4):
- data read by the CPU from a data bus of the programmable unit,
- those external events that have an influence on the program counter of the CPU of the programmable unit,
- optionally, periodically created complete or partial copies of a register memory (3) of the CPU of the programmable unit, and
- optionally, a data type signal.

52. Programmable unit according to claim 51, which is configured to transfer exclusively the following emulation data through the trace port (15):
- data read by the CPU from a data bus of the programmable unit,
- those external events that have an influence on a program counter,
- optionally, periodically created complete or partial copies of a register memory, and
- optionally, one or more data type signals.

53. Programmable unit according to either claim 51 or claim 52, which is configured to transfer the emulation data with falling and/or rising edges of the clock signal (8).

54. Programmable unit (1) according to any one of claims 51 to 53, which is configured to generate a clock signal with a frequency that is increased over a CPU clock frequency for driving the transfer of the emulation data.

55. Programmable unit (1) according to any one of claims 51 to 54, which is configured to distribute the emulation data to be transferred over a plurality of clock cycles of the CPU (2).

56. Programmable unit (1) according to any of one of claims 51 to 55, which is configured to switch to an operating mode for using the trace port (15) as a standard input/output port.

57. Programmable unit according to any one of claims 51 to 56, which is insertable with the trace port (15) into a target system in place of another programmable unit, for debugging or emulation.

58. Programmable unit according to any one of claims 51 to 57, which is configured to transfer a partial or complete copy of a program memory and/or a partial or complete copy of a RAM of the programmable unit (1) to the emulation device, provided the RAM has not been completely initialised at the beginning.

59. Programmable unit according to any one of claims 51 to 58, wherein a trace controller (18) of the programmable unit is configured to transfer a data type signal (42) as a part of the emulation data to the trace port (15) and, if present, to a buffer memory (51) of the programmable unit (1) for temporary storage.

60. Programmable unit according to any one of claims 51 to 59, which is configured to transmit its CPU clock signal through the trace port (15) to the emulation device (84).

## Revendications

1. Procédé d'émulation d'une unité programmable (1), qui possède au moins une CPU (2), à l'aide d'un dispositif d'émulation externe (4), qui est relié à l'unité programmable par l'intermédiaire d'une liaison de communication (5), dans lequel le procédé présente les étapes suivantes :
- transmettre des données d'initialisation déterminées par l'intermédiaire de la liaison de communication (5) au dispositif d'émulation (4), grâce auxquelles données d'initialisation l'unité programmable s'est initialisée et/ou a été initialisée, pour l'initialisation de l'émulation ;
- émuler l'unité programmable (1) dans le dispositif d'émulation externe en utilisant les données d'émulation transmises ;
- détecter des données de trace respectives à partir de l'émulation dans le dispositif d'émulation externe; et
- mémoriser et/ou délivrer les données de trace,
**caractérisé par**
- la transmission d'un signal d'horloge de CPU (8 et, dans la relation définie par rapport au signal d'horloge de CPU, des données d'émulation suivantes au dispositif d'émulation ;
- les données, qui sont lues par la CPU à partir d'un bus de données de l'unité programmable;
- des événements externes, qui ont une influence sur le compteur de programme de la CPU (2) de l'unité programmable (1),
- en option, des copies partielles ou complètes générées périodiquement d'une mémoire de registre (3) de la CPU (2) de l'unité programmable (1), ainsi que
- en option, un signal de type de données.

2. Procédé selon la revendication 1, dans lequel soit le signal d'horloge de CPU (8) soit un signal, qui permet de dériver le signal d'horloge de CPU, est transmis par l'unité programmable (1) au dispositif d'émulation par l'intermédiaire d'un port de trace.

3. Procédé selon la revendication 1, dans lequel l'étape de transmission des données d'émulation comprend la transmission exclusivement des données suivantes :
- les données qui sont lues par la CPU à partir d'un bus de données de l'unité programmable;
- les événements externes qui ont une influence sur le compteur de programme;
- en option, les copies partielles ou complètes générées périodiquement d'une mémoire de registre, ainsi que
- en option, un ou plusieurs signaux de types de données.

4. Procédé selon l'une des revendications précédentes, dans lequel l'émulation est effectuée à partir de la réception d'une quantité de données transmise par l'unité programmable (1).

5. Procédé selon l'une des revendications précédentes, dans lequel le signal d'horloge de CPU (8) est transmis à une commande de trace (18) et/ou une mémoire tampon (51) de l'unité programmable (1).

6. Procédé selon l'une des revendications précédentes, dans lequel les données d'émulation sont transmises avec les flancs descendants et/ou montants du signal d'horloge de CPU (8).

7. Procédé selon l'une des revendications précédentes, dans lequel une fréquence d'horloge, qui commande la transmission des données d'émulation, est élevée pendant la transmission des données d'émulation par rapport à la fréquence d'horloge de CPU.

8. Procédé selon l'une des revendications précédentes, dans lequel les données d'émulation transmises sont divisées en plusieurs cycles de la CPU cible (2).

9. Procédé selon l'une des revendications précédentes, dans lequel les cycles d'attente de la CPU sont commandés par l'unité programmable ou sont ajoutés par le dispositif d'émulation pendant la transmission des données d'émulation.

10. Procédé selon l'une des revendications précédentes, dans lequel l'unité programmable (1) est commutée dans un mode de fonctionnement en utilisant un port de trace (15) de l'unité programmable, réalisée en tant que partie de la liaison de communication (5), en tant que port d'insertion/sortie général, dans lequel la commutation concerne soit le port de trace entier (15) soit une partie des broches du port de trace.

11. Procédé selon l'une des revendications précédentes, dans lequel une reproduction partielle ou totale d'une mémoire de programme et/ou une reproduction partielle ou totale d'une RAM de l'unité programmable (1) est transmise au dispositif d'émulation (4), tant que la RAM n'est pas complètement initialisée au départ.

12. Procédé selon l'une des revendications précédentes, dans lequel les données de trace reçues sont mémorisées dans un dispositif de mémoire (6) du dispositif d'émulation (4).

13. Procédé selon l'une des revendications précédentes, comportant une étape de filtrage des données de trace détectées, de délivrance et/ou de mémorisation au moyen du dispositif d'émulation (4).

14. Procédé selon la revendication 1, dans lequel l'émulation de l'unité programmable (1) est effectuée de façon autonome par l'unité d'émulation (4) par les données d'émulation préalablement conservées et mémorisées.

15. Procédé selon l'une des revendications précédentes, dans lequel les signaux d'horloge de la CPU (8) sont comptés dans le dispositif d'émulation (4) au moyen d'un dispositif de comptage (20) pour associer un moment déterminé aux données d'émulation transmises.

16. Procédé selon la revendication 14 ou 15, dans lequel l'émulation de l'unité programmable est effectuée sans émulation d'une RAM de l'unité programmable.

17. Procédé selon l'une des revendications précédentes, dans lequel le déroulement du programme de l'unité programmable (1) est simulé par le dispositif d'émulation (4) pour chaque zone de contexte à partir du moment d'une reproduction complète détectée en dernier d'un banc de registre (3) du même contexte.

18. Procédé selon l'une des revendications 13 à 17, dans lequel la CPU de l'unité programmable est émulée à l'aide d'un programme informatique, qui est exécuté sur un ordinateur.

19. Procédé selon la revendication 14, dans lequel l'émulation de l'unité programmable comporte l'émulation soit d'une partie de la RAM de l'unité programmable soit de la totalité de la RAM de l'unité programmable soit de la totalité de la RAM de l'unité programmable (1).

20. Procédé selon l'une des revendications précédentes, comportant les étapes de :
- détection dans l'unité programmable, si les données lues momentanément par la CPU ou pendant une opération DMA proviennent d'une zone d'adresse de l'unité programmable, auxquelles on peut accéder par d'autres unités fonctionnelle que la CPU de l'unité programmable (1), suivi par
- la transmission au dispositif d'émulation (4) des seules données, qui sont lues par la CPU ou pendant une opération DMA, qui proviennent de la zone d'adresse de l'unité programmable, qui peut être écrite par d'autres unités fonctionnelles que la CPU de l'unité programmable.

21. Procédé selon la revendication 20, dans lequel les zones d'adresse, qui peuvent être écrites par d'autres unités fonctionnelles que la CPU de l'unité programmable, sont programmées de façon fixe et/ou librement configurées.

22. Procédé selon l'une des revendications 1 à 14, dans lequel l'émulation est effectuée en temps réel dans le dispositif d'émulation (4).

23. Procédé selon la revendication 22, dans lequel, en vue de l'exécution de l'émulation en temps réel, une implémentation appropriée de la CPU (2) de l'unité programmable (1) est chargée dans un élément logique programmable du dispositif d'émulation (4).

24. Procédé selon l'une des revendications précédentes, dans lequel l'unité programmable (1) ou la CPU (2) de l'unité programmable est interrompue par le dispositif d'émulation (4) ou par l'unité programmable (1) lors de la reconnaissance d'un point d'arrêt valable.

25. Procédé selon l'une des revendications précédentes, dans lequel chaque point d'arrêt est initié et géré par le dispositif d'émulation (4).

26. Procédé selon l'une des revendications précédentes, dans lequel un signal d'arrêt (39, 52) est transmis par une commande de trace (18) de l'unité programmable ou par une commande de trace (16) du dispositif d'émulation à la CPU (2) de l'unité programmable (1).

27. Procédé selon l'une des revendications 22 à 26, dans lequel le dispositif d'émulation (4) accède au bus d'adresse et au bus de données (10, 7) de l'unité programmable (1) après interruption de l'unité programmable.

28. Procédé selon l'une des revendications 22 à 27, dans lequel le dispositif d'émulation possède un accès d'écriture et de lecture à sa mémoire lors d'une émulation en temps réel et, dans le cas d'un accès de lecture, reçoit les données transmises par l'unité programmable (1).

29. Procédé selon l'une des revendications précédentes, dans lequel un sélecteur de données (50) du dispositif d'émulation (4) est commuté pour une extraction de données à partir d'un dispositif de mémoire du dispositif d'émulation (4) ou pour la lecture des données (49) de l'unité programmable.

30. Procédé selon l'une des revendications 22 à 29, dans lequel l'émulation en temps réel de l'unité programmable est effectuée sans émulation de la RAM de l'unité programmable.

31. Procédé selon la revendication 30, dans lequel les données d'émulation suivantes sont exclusivement transmises :
- les données, qui sont extraites par la CPU du bus de données de l'unité programmable;
- les événements externes, qui possèdent une influence sur un compteur de programme.

32. Procédé selon l'une des revendications 22 à 30, dans lequel l'émulation en temps réel de l'unité programmable comprend une émulation soit d'une partie soit de la RAM entière de l'unité programmable en temps réel.

33. Procédé selon l'une des revendications 22 à 32, dans lequel, dans une émulation en temps réel, une reproduction totale ou partielle d'au moins une RAM de l'unité programmable (1) est effectuée également dans le dispositif d'émulation (4).

34. Procédé selon la revendication 33, dans lequel les unités fonctionnelles de l'unité programmable sont émulées, qui accèdent par écrit à l'unité programmable (1).

35. Dispositif d'émulation d'une unité programmable, comportant
- une unité programmable (1), qui comporte au moins une CPU (2)
- un dispositif d'émulation (4), qui est relié à l'unité programmable (1) sous la forme d'une unité externe (14) par l'intermédiaire d'un port de trace (15) en tant que liaison de communication (5) pour transmettre les données d'émulation et est réalisé, pour détecter les données de trace correspondantes à partir d'une émulation de l'unité programmable,
dans lequel le dispositif d'émulation (4) présente au moins un dispositif de commande de trace (16) et un dispositif de mémoire (11) pour les données de trace et/ou un dispositif de sortie en liaison avec un dispositif externe de traitement et d'affichage (28),
dans lequel l'unité programmable est réalisée, pour transmettre des données d'initialisation prédéterminées par l'intermédiaire de la liaison de communication (5) au dispositif d'émulation (4), grâce auxquelles données d'initialisation l'unité programmable s'est initialisée et/ou a été initialisée, en vue de l'initialisation de l'émulation ;
**caractérisé en ce que** l'unité programmable est réalisée
- pour transmettre un signal d'horloge de CPU (8) de l'unité programmable et, dans une relation définie par rapport au signal d'horloge de la CPU, les données d'émulation suivantes par la liaison de communication (5) au dispositif d'émulation (4) :
et par
- et des données, qui sont extraites par la CPU d'un bus de données de l'unité programmable ;
- les événements externes, qui ont une influence sur le compteur de programme de la CPU de l'unité programmable,
- en option, des copies partielles ou complètes générées périodiquement d'une mémoire de registre (3) de la CPU de l'unité programmable, ainsi que
- en option, un signal de type de données.

36. Dispositif selon la revendication 35, dans lequel l'unité programmable est réalisée pour transmettre exclusivement les données d'émulation suivantes au dispositif d'émulation (4):
- les données, qui sont extraites par la CPU d'un bus de données de l'unité programmable ;
- les événements externes, qui ont une influence sur un compteur de programme,
- en option, des copies partielles ou complètes générées périodiquement d'une mémoire de registre, ainsi que
- en option, un ou plusieurs signaux de types de données.

37. Dispositif selon la revendication 35 ou 36, dans lequel la commande de trace (18) de l'unité programmable est réalisée, pour transmettre un signal de type de données (42) en tant que partie des données d'émulation au port de trace (15), et tant qu'il existe, à une mémoire tampon (51) de l'unité programmable (1) pour une mémorisation intermédiaire.

38. Dispositif selon l'une des revendications 35 à 37, qui est réalisé, pour activer une communication bidirectionnelle entre l'unité programmable (1) et le dispositif d'émulation (4).

39. Dispositif selon l'une des revendications 35 à 38, dans lequel le dispositif d'émulation (4) présente une interface de mise au point (25).

40. Dispositif selon l'une des revendications 35 à 39, dans lequel le dispositif d'émulation possède une mémoire de programme (33), qui correspond à la mémoire de programme de l'unité programmable (1).

41. Dispositif selon l'une des revendications 35 à 40, dans lequel l'unité programmable (1) peut être utilisée avec un port de trace (15) dans un système de poursuite au lieu d'une unité programmable (1) sans port de trace, pour une mise au point ou pour une émulation.

42. Dispositif selon l'une des revendications 35 à 41, dans lequel le dispositif d'émulation (4) présente un sélecteur de données (50) pouvant être commuté, qui peut être commuté pour extraire les données d'une RAM (44) du dispositif d'émulation (4) ou pour lire les données reçues par l'unité programmable (1).

43. Dispositif selon l'une des revendications 35 à 42, dans lequel l'unité programmable (1) est réalisée pour envoyer le signal d'horloge de CPU (8) au dispositif d'émulation (4) par l'intermédiaire d'un port de trace (15).

44. Dispositif selon l'une des revendications 35 à 43, dans lequel le dispositif d'émulation (4) en tant qu'unité d'émulation en temps réel (41) possède un module logique sous la forme d'une puce hors connexion ou d'un module logique programmable (23).

45. Dispositif selon l'une des revendications 35 à 44, dans lequel le dispositif d'émulation, en tant qu'unité d'émulation en temps réel (41), est relié à une puce d'adresse (31) et/ou à une mémoire de programme (33) et/ou au bus de données de programme (32).

46. Dispositif selon l'une des revendications 35 à 45, dans lequel le dispositif d'émulation (4) présente un dispositif de démultiplexage (40).

47. Dispositif selon l'une des revendications 35 à 46, dans lequel le dispositif d'émulation (4) présente des registres de commande implémentés (54), qui contrôlent une ou plusieurs sorties numériques (55) du dispositif d'émulation (4) et/ou des unités périphériques de l'unité programmable (1) émulées dans le dispositif d'émulation (4).

48. Dispositif selon l'une des revendications 35 à 47, dans lequel les sorties numériques (55) du dispositif d'émulation (4) peuvent être commutées en tant que sorties et dans lequel les signaux des sorties numériques (55) peuvent être réintégrés dans l'unité programmable (1) par l'intermédiaire d'une liaison appropriée.

49. Dispositif selon l'une des revendications 35 à 48, dans lequel une ligne de bus d'adresse (20) dans l'unité programmable (1) est reliée à la commande de trace (18) de l'unité programmable par l'intermédiaire d'un comparateur d'adresse (22).

50. Dispositif selon l'une des revendications 35 à 49, dans lequel le dispositif d'émulation en tant qu'unité d'émulation en temps réel (41) est relié à une RAM (44) par l'intermédiaire d'un bus de données.

51. Unité programmable (1), comportant au moins une CPU (2) et un port de trace en tant que liaison de communication (5) pour transmettre des données d'émulation à un dispositif d'émulation externe (4), dans lequel l'unité programmable est réalisée,
- pour transmettre des données d'initialisation prédéterminées au dispositif d'émulation (4) par l'intermédiaire d'une liaison de communication (5), grâce auxquelles données d'initialisation l'unité programmable s'est initialisée et/ou a été initialisée, en vue de l'initialisation de l'émulation ;
**caractérisée en ce que** l'unité programmable est réalisée,
- pour transmettre un signal d'horloge de CPU (8) de l' unité programmable et, dans une relation définie par rapport au signal d'horloge de CPU, les données d'émulation suivantes au dispositif d'émulation (4) par la liaison de communication (5) ;
- des données, qui sont extraites par la CPU d'un bus de données de l'unité programmable ;
- des événements externes, qui ont une influence sur le compteur de programme de la CPU de l'unité programmable,
- en option, des copies partielles ou complètes générées périodiquement d'une mémoire de registre (3) de la CPU de l'unité programmable, ainsi que
- en option, un signal de types de données.

52. Unité programmable selon la revendication 51, qui est réalisée, pour délivrer exclusivement les données d'émulation suivantes par l'intermédiaire du port de trace (15) :
- les données, qui sont extraites par la CPU d'un bus de données de l'unité programmable;
- les événements externes, qui ont une influence sur un compteur de programme,
- en option, des copies partielles ou complètes générées périodiquement d'une mémoire de registre, ainsi que
- en option, un ou plusieurs signaux de types de données.

53. Unité programmable selon la revendication 51 ou 52, qui est réalisée, pour transmettre les données d'émulation avec les flancs descendants et/ou montants du signal d'horloge (8).

54. Unité programmable (1) selon l'une des revendications 51 à 53, qui est réalisée, pour générer un signal d'horloge avec une fréquence, qui est élevée vis-à-vis d'une fréquence d'horloge de CPU, pour commander la transmission des données d'émulation.

55. Unité programmable (1) selon l'une des revendications 51 à 54, qui est réalisée, pour répartir les données d'émulation à transmettre par l'intermédiaire sur plusieurs cycles d'horloge de la CPU (2).

56. Unité programmable (1) selon l'une des revendications 51 à 55, qui est réalisée, pour commuter dans un mode de fonctionnement en utilisant le port de trace (15) en tant que port d'insertion/sortie général.

57. Unité programmable selon l'une des revendications 51 à 56, qui est réalisée utilisable avec le port de trace (15) dans un système de poursuite, à la place d'une autre unité programmable, pour une émulation ou pour une mise au point.

58. Unité programmable selon l'une des revendications 51 à 57, qui est réalisée, pour transmettre une reproduction partielle ou totale d'une mémoire de programme et/ou une reproduction partielle ou totale d'une RAM de l'unité programmable (1) au dispositif d'émulation, en supposant que la RAM n'a pas été initialisée complètement au début.

59. Unité programmable selon l'une des revendications 51 à 58, dans lequel une commande de trace (18) de l'unité programmable est réalisée, pour transmettre un signal de type de données (42) en tant que partie des données d'émulation au port de trace (15), et tant qu'il existe, à une mémoire tampon (51) de l'unité programmable (1) pour une mémorisation intermédiaire.

60. Unité programmable selon l'une des revendications 51 à 59, qui est réalisée, pour transmettre son signal d'horloge de CPU au dispositif d'émulation (4) par l'intermédiaire du port de trace (15).
